# EUROPEAN PATENT APPLICATION

(11) **EP 4 836 352 A1**
(43) Date of publication of application: **04.11.2026**
(21) Application number: 25741549.7
(22) Date of filing: 15.01.2025
(51) Int. Cl.: H04L 9/32

(54) **COMMUNICATION METHOD AND APPARATUS**

(30) Priority: 17.01.2024 CN 202410071582
(71) Applicant: Huawei Technologies Co., Ltd., Shenzhen, Guangdong 518129 (CN)
(72) Inventor: WANG, Donghui, Shenzhen, Guangdong 518129 (CN); LIU, Faye, Shenzhen, Guangdong 518129 (CN)
(74) Representative: Goddar, Heinz J.
(86) International application number: PCT/CN2025/072584
(87) International publication number: WO 2025/152988

(57) **Abstract**

Embodiments of this application provide a communication method and apparatus, and relate to the communication field, to perform attribute endorsement for a node, so that data access control based on an endorsed attribute can be implemented for the node. The method includes: obtaining attribute information, and sending the attribute information to a second node. The attribute information indicates an attribute corresponding to the proven second node.

## Description

This application claims priority to Chinese Patent Application No. 202410071582.6, filed with the China National Intellectual Property Administration on January 17, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a telecommunication network service, a profile (profile) corresponding to user identification (identification, ID) is strongly tied to the telecommunication network service and lacks attribute information of the user. In addition, the user is unable to apply for attribute information from an operator or from a third party through an operator network. As a result, the user identity is confined in the telecommunication network, preventing the telecommunication network from leveraging credibility of third parties to enhance security of the user identity.

### SUMMARY

This application provides a communication method and apparatus. Attribute information is allocated to a user by providing an attribute endorsement service for the user, and access control on the user may be performed based on the attribute information, enhancing security of telecommunication network services, and implementing data access and authorization.

To achieve the foregoing objective, this application uses the following technical solutions.

According to a first aspect, a communication method is provided. The method may be performed by a first node, or may be performed by a component of the first node, for example, a processor, a chip, or a chip system of the first node, or may be implemented by a logic module or software that can implement all or a part of functions of the first node. The method includes: obtaining attribute information, and sending the attribute information to a second node, where the attribute information indicates an attribute corresponding to the proven second node.

According to the communication method, the first node may distribute the attribute information corresponding to the second node to the second node, so that the second node obtains the attribute, of the second node, proven or endorsed by the first node. Therefore, an operator or a third-party institution (such as a university, an enterprise, a bank, or a functional department) may be enabled to leverage its credibility to enhance security of an identity of the second node, thereby enhancing security of telecommunication network services, or facilitating the second node to perform a related service, for example, data access authorization. In embodiments of this application, the first node may be a blockchain node or a node (for example, a fourth node described below) configured to provide an attribute endorsement or proof service.

In a possible design scheme, obtaining the attribute information may include: receiving a first request from the second node, where the first request is used to request to obtain an attribute; and sending the attribute information to the second node based on the first request. Based on this design scheme, the first node may obtain the attribute information for the second node as triggered by the second node. In other words, the second node may actively apply to the first node for a corresponding proven attribute according to a requirement.

In a possible design scheme, sending the attribute information to the second node based on the first request may include: generating the attribute information based on the first request by using a smart contract, where the smart contract is associated with an attribute endorsement service; and sending the attribute information to the second node. In this design scheme, the first node may be a blockchain node, and a smart contract related to the attribute endorsement service may be deployed on the first node, so that the first node may generate the attribute information for the second node based on the deployed smart contract. In addition, the smart contract related to the attribute endorsement service is deployed on a blockchain, to implement attribute interoperability between nodes configured to provide different attribute endorsement or proof services, different second nodes, operator nodes, and the like.

In a possible design scheme, the communication method according to the first aspect may further include: receiving a fifth request from a fourth node, where the first request is used to request installation of the smart contract; and installing the smart contract based on the fifth request. The fourth node is a node configured to provide an attribute endorsement or proof service. Therefore, when the first node is a blockchain node, the blockchain node may deploy, based on the request of the fourth node, the smart contract related to the attribute endorsement service.

In a possible design scheme, installing the smart contract based on the fifth request may include: sending second information to the fourth node based on the fifth request, where the second information indicates whether installation of the smart contract is supported; and receiving third information from the fourth node, where the third information indicates to install the smart contract, and the third information is determined based on the second information corresponding to at least one blockchain node on a blockchain. Therefore, after receiving the smart contract installation request, the blockchain node may reach consensus on the installation request with other blockchain nodes on the blockchain, and each blockchain node may feed back, to the blockchain node, information about whether each blockchain node supports installation of the smart contract, so that the fourth node indicates, based on whether each blockchain node can support installation of the smart contract, whether the blockchain node installs the smart contract.

In a possible design scheme, when a result indicating whether installation of the smart contract is supported is recorded by the first node on the blockchain, the second information may include an address, on the blockchain, of the result indicating whether installation of the smart contract is supported. Therefore, a blockchain node participating in feeding back the second information may publish, on the blockchain, the second information fed back by the blockchain node, so that another blockchain node learns whether installation of the smart contract can be supported.

In a possible design scheme, the third information may include a result indicating whether installation of the smart contract is supported corresponding to at least one blockchain node on the blockchain, and/or an address, on the blockchain, of the result indicating whether installation of the smart contract is supported corresponding to the at least one blockchain node.

In a possible design scheme, the communication method according to the first aspect may further include: receiving fourth information from the fourth node, where the fourth information indicates usage information of the smart contract. Therefore, after determining to install the smart contract, the blockchain node may further obtain the usage information of the smart contract from the fourth node, which may be understood as a profile corresponding to the smart contract, so that the blockchain node can complete use of the smart contract based on the usage information.

In a possible design scheme, the fourth information may include at least one of the following: an attribute endorsement service corresponding to the smart contract, an address of the smart contract, an input parameter of the smart contract, an output parameter of the smart contract, or an application template for the attribute information.

In a possible design scheme, the communication method according to the first aspect may further include: sending the attribute information to a blockchain node; and receiving first information from the blockchain node, where the first information indicates an address of the attribute information on a blockchain. Based on this design scheme, the first node may be a node configured to provide an attribute endorsement or proof service. Therefore, after generating the attribute information, the first node may publish the attribute information on the blockchain, so that another node may also obtain the corresponding attribute information from the blockchain. In addition, the first node may store the address of the attribute information on the blockchain.

In a possible design scheme, the first request may include at least one of the following: an identifier of the second node, information indicating a type of the attribute requested to be obtained, identity proof information corresponding to the second node, a signature of a third node on identity proof information corresponding to the second node, or attribute content requested to be obtained. In embodiments of this application, the third node may be a node configured to prove the identity of the second node, for example, a device corresponding to a third-party authority.

In a possible design scheme, the attribute information may include the attribute corresponding to the second node and a signature of a fourth node related to the attribute corresponding to the second node. Therefore, the signed attribute of the second node is sent to the second node in a form of attribute information, so that the second node obtains the attribute having credibility.

In a possible design scheme, the attribute information may further include at least one of the following: an issuance time of the attribute, a validity period of the attribute, the identifier of the second node, or a signature of a blockchain node on the attribute corresponding to the second node.

In a possible design scheme, the communication method according to the first aspect may further include: sending first information to the second node, where the first information indicates the address of the attribute information on the blockchain. Therefore, the first node may further send, to the second node, the address of the attribute information corresponding to the second node on the blockchain, to facilitate querying by the second node or notification to another node of querying, ensuring authenticity and validity of the attribute.

According to a second aspect, a communication method is provided. The method may be performed by a second node, or may be performed by a component of the second node, for example, a processor, a chip, or a chip system of the second node, or may be implemented by a logic module or software that can implement all or a part of functions of the second node. The method includes: receiving attribute information from a first node, where the attribute information indicates an attribute corresponding to a proven second node; and determining the attribute corresponding to the second node based on the attribute information.

In a possible design scheme, the attribute information may include the attribute corresponding to the second node and a signature of a fourth node related to the attribute corresponding to the second node.

In a possible design scheme, the attribute information may further include at least one of the following: an issuance time of the attribute information, a validity period of the attribute information, an identifier of the second node, or a signature of a blockchain node on the attribute corresponding to the second node.

In a possible design scheme, the communication method according to the second aspect may further include: receiving first information from the first node, where the first information indicates an address of the attribute information on a blockchain.

In a possible design scheme, the communication method according to the first aspect may further include: sending a first request to the first node, where the first request is used to request to obtain an attribute.

According to a third aspect, a communication method is provided. The method may be performed by a blockchain node, or may be performed by a component of the blockchain node, for example, a processor, a chip, or a chip system of the blockchain node, or may be implemented by a logic module or software that can implement all or a part of functions of the blockchain node. The method includes: receiving a fifth request from a fourth node, where the fifth request is used to request installation of a smart contract corresponding to an attribute endorsement service supported by the fourth node; and installing the smart contract based on the fifth request.

In a possible design scheme, installing the smart contract based on the fifth request may include: sending second information to the fourth node based on the fifth request, where the second information indicates whether installation of the smart contract is supported; and receiving third information from the fourth node, where the third information indicates to install the smart contract, and the third information is determined based on the second information corresponding to at least one blockchain node on a blockchain.

In a possible design scheme, when a result indicating whether installation of the smart contract is supported is recorded by the blockchain node on the blockchain, the second information may include an address, on the blockchain, of the result indicating whether installation of the smart contract is supported.

In a possible design scheme, the third information may include a result indicating whether installation of the smart contract is supported corresponding to at least one blockchain node on the blockchain, and/or an address, on the blockchain, of the result indicating whether installation of the smart contract is supported corresponding to the at least one blockchain node.

In a possible design scheme, the communication method according to the second aspect may further include: receiving fourth information from the fourth node, where the fourth information indicates usage information of the smart contract.

In a possible design scheme, the fourth information may include at least one of the following: an attribute endorsement service corresponding to the smart contract, an address of the smart contract, an input parameter of the smart contract, an output parameter of the smart contract, or an application template for the attribute information.

According to a fourth aspect, a communication method is provided. The method may be performed by a fourth node, or may be performed by a component of the fourth node, for example, a processor, a chip, or a chip system of the fourth node, or may be implemented by a logic module or software that can implement all or a part of functions of the fourth node. The method includes: generating a fifth request; and sending the fifth request to a blockchain node, where the fifth request is used to request installation of a smart contract corresponding to an attribute endorsement service supported by the fourth node.

In a possible design scheme, the communication method according to the fourth aspect may further include: receiving second information from the blockchain node, where the second information indicates whether installation of the smart contract is supported; and sending third information to the blockchain node, where the third information indicates to install the smart contract, and the third information is determined based on the second information corresponding to at least one blockchain node on a blockchain.

In a possible design scheme, when a result indicating whether installation of the smart contract is supported is recorded by the blockchain node on the blockchain, the second information may include an address, on the blockchain, of the result indicating whether installation of the smart contract is supported.

In a possible design scheme, the third information may include a result indicating whether installation of the smart contract is supported corresponding to at least one blockchain node on the blockchain, and/or an address, on the blockchain, of the result indicating whether installation of the smart contract is supported corresponding to the at least one blockchain node.

In a possible design scheme, the communication method according to the fourth aspect may further include: sending fourth information to the blockchain node, where the fourth information indicates usage information of the smart contract.

In a possible design scheme, the fourth information may include at least one of the following: an attribute endorsement service corresponding to the smart contract, an address of the smart contract, an input parameter of the smart contract, an output parameter of the smart contract, or an application template for the attribute information.

In a possible design scheme, the communication method according to the fourth aspect may further include: receiving a first request from a second node, where the first request is used to request to obtain an attribute; and sending the attribute information to the second node based on the first request.

In a possible design scheme, the attribute information may include an attribute corresponding to the second node and a signature of a fourth node related to the attribute corresponding to the second node.

In a possible design scheme, the attribute information may further include at least one of the following: an issuance time of the attribute, a validity period of the attribute, an identifier of the second node, or a signature of a blockchain node on the attribute corresponding to the second node.

In a possible design scheme, the communication method according to the fourth aspect may further include: receiving first information from a blockchain node, where the first information indicates an address of the attribute information on the blockchain.

For descriptions of technical effects of the method according to any one of the second aspect to the fourth aspect, refer to related descriptions of technical effects of the method according to the first aspect. Details are not described herein again.

According to a fifth aspect, a communication method is provided. The method may be performed by an operator node, or may be performed by a component of the operator node, for example, a processor, a chip, or a chip system of the operator node, or may be implemented by a logic module or software that can implement all or a part of functions of the operator node. The method includes: determining that a first terminal device and a second terminal device access a network corresponding to the operator node; and sending an attribute corresponding to the second terminal device to the first terminal device when determining that the first terminal device receives a call request of the second terminal device.

According to the communication method, the operator node may introduce a proven attribute of a user during a call between users, for example, display a proven attribute of a calling user in an incoming call interface of the user, to implement credibility interoperability and enhance security of telecommunication network services.

In a possible design scheme, the communication method according to the fifth aspect may further include: sending a sixth request to a blockchain node, where the sixth request is used to request to obtain the attribute corresponding to the second terminal device; and receiving attribute information corresponding to the second terminal device from the blockchain node, where the attribute information corresponding to the second terminal device includes the attribute corresponding to the second terminal device and a signature of a fourth node related to the attribute corresponding to the second terminal device. Therefore, the operator node may obtain the attribute information corresponding to the second terminal device from a blockchain, to display the proven attribute of the second terminal device during a call.

In a possible design scheme, the attribute information corresponding to the second terminal device may further include an identifier of the second terminal device and/or a signature of the blockchain node on the attribute corresponding to the second terminal device.

According to a sixth aspect, a communication method is provided. The method may be performed by a fifth node, or may be performed by a component of the fifth node, for example, a processor, a chip, or a chip system of the fifth node, or may be implemented by a logic module or software that can implement all or a part of functions of the fifth node. The method includes: receiving a second request from a second node, where the second request is used to request to access data of the fifth node, and the second request includes attribute information corresponding to the second node; and determining, based on the attribute information corresponding to the second node and proof information, whether the second node meets a requirement for accessing data of the fifth node, where the proof information is used to verify an attribute corresponding to the second node.

According to the communication method, the fifth node may perform data access control on the second node based on the attribute information of the second node, improving data access reliability and security, and enhancing service security.

In a possible design scheme, the second request may further include an address, on a blockchain, of the attribute information corresponding to the second node. Therefore, the fifth node may query the blockchain for the corresponding attribute information and/or proof information based on the address, to prove the attribute corresponding to the second node, and ensure authenticity and validity of the attribute.

In a possible design scheme, the communication method according to the sixth aspect may further include: sending a third request to a blockchain node, where the third request is used to request to obtain the proof information; and receiving the proof information from the blockchain node.

In a possible design scheme, the proof information may include credential information of a fourth node related to the attribute corresponding to the second node. For example, a certificate of the fourth node related to the attribute corresponding to the second node.

In a possible design scheme, the proof information may further include: a hash of the attribute corresponding to the second node, and/or the attribute corresponding to the second node.

In a possible design scheme, receiving the second request from the second node may include: receiving identification information from the second node, where the identification information includes an identifier of the second node and a signature of a fourth node related to the identifier of the second node; determining to establish secure authentication with the second node when the identifier of the second node is verified; and receiving the second request from the second node when the secure authentication is completed. Therefore, the fifth node and the second node may perform secure authentication based on the identifier of the second node. The fifth node and the second node can establish a secure connection only when the secure authentication succeeds, to exchange a message or information.

In a possible design scheme, the communication method according to the sixth aspect may further include: sending information for data access to a blockchain node, where the information for data access includes information indicating a requirement that needs to be met by the second node for accessing data of the fifth node and information indicating to obtain data of the fifth node. Based on this design scheme, the fifth node may publish, on the blockchain, information related to accessing data of the fifth node, so that the second node obtains the information, to implement data access.

In a possible design scheme, the communication method according to the sixth aspect may further include: sending a first key to the second node when the second node meets the requirement for accessing data of the fifth node, where the first key is determined based on the attribute corresponding to the second node, and the first key is used to decrypt encrypted data of the fifth node. Based on this design scheme, after the fifth node encrypts and stores the data of the fifth node, the fifth node may further send a key to the second node when determining that the second node meets the requirement for data access, so that the second node decrypts the encrypted data.

In a possible design scheme, the information indicating to obtain data of the fifth node includes a storage address of the encrypted data of the fifth node, and/or information indicating the encrypted data of the fifth node.

In a possible design scheme, the data of the fifth node may be encrypted by using a second key, the information indicating to obtain data of the fifth node may further include the encrypted second key, and the first key is specifically used to decrypt the encrypted second key.

In a possible design scheme, the communication method according to the sixth aspect may further include: sending the encrypted data of the fifth node to a storage node corresponding to the storage address. Therefore, the fifth node uniformly stores the encrypted data of the fifth node in the storage node, which reduces signaling overheads in comparison with that the fifth node separately sends the encrypted data to multiple second nodes.

In a possible design scheme, the communication method according to the sixth aspect may further include: sending, to a blockchain node, information indicating an access record of the second node. Therefore, the fifth node may further record access information of the second node, and publish the access information on the blockchain, to query and learn an access status of the second node.

In a possible design scheme, the attribute information corresponding to the second node may include the attribute corresponding to the second node and a signature of a fourth node associated with the attribute corresponding to the second node.

According to a seventh aspect, a communication method is provided. The method may be performed by a second node, or may be performed by a component of the second node, for example, a processor, a chip, or a chip system of the second node, or may be implemented by a logic module or software that can implement all or a part of functions of the second node. The method includes: generating a second request; and sending the second request to a fifth node, where the second request is used to request to access data of the fifth node, and the second request includes attribute information corresponding to the second node.

In a possible design scheme, the second request may further include an address, on a blockchain, of the attribute information corresponding to the second node.

In a possible design scheme, sending the second request to the fifth node may include: establishing secure authentication with the fifth node based on an identifier of the second node; and sending the second request to the fifth node when the secure authentication is completed.

In a possible design scheme, the communication method according to the seventh aspect may further include: receiving a first key from the fifth node, where the first key is determined based on an attribute corresponding to the second node, and the first key is used to decrypt encrypted data of the fifth node.

In a possible design scheme, the communication method according to the seventh aspect may further include: sending a fourth request to a blockchain node, where the fourth request is used to request to obtain information for accessing data of the fifth node; receiving information for data access from the blockchain node, where the information for data access includes information indicating a requirement that needs to be met by the second node for accessing data of the fifth node and information indicating to obtain data of the fifth node; obtaining the encrypted data of the fifth node based on the information for data access; and decrypting the encrypted data of the fifth node based on the first key.

In a possible design scheme, the information indicating to obtain data of the fifth node includes a storage address of the encrypted data of the fifth node, and/or information indicating the encrypted data of the fifth node.

In a possible design scheme, the data of the fifth node may be encrypted by using a second key, the information indicating to obtain data of the fifth node may further include the encrypted second key, and the first key is specifically used to decrypt the encrypted second key.

In a possible design scheme, obtaining the encrypted data of the fifth node based on the information for data access may include: sending a seventh request to a storage node corresponding to the storage address, where the seventh request is used to request to obtain data of the fifth node; and receiving the encrypted data of the fifth node from the storage node.

In a possible design scheme, decrypting the encrypted data of the fifth node based on the first key may include: decrypting the encrypted second key based on the first key; and decrypting, based on the second key, the data of the fifth node encrypted by using the second key.

In a possible design scheme, the attribute information corresponding to the second node includes the attribute corresponding to the second node and a signature of a fourth node associated with the attribute corresponding to the second node.

According to an eighth aspect, a communication method is provided. The method may be performed by a blockchain node, or may be performed by a component of the blockchain node, for example, a processor, a chip, or a chip system of the blockchain node, or may be implemented by a logic module or software that can implement all or a part of functions of the blockchain node. The method includes: receiving a fourth request from a second node, where the fourth request is used to request to obtain information for accessing data of a fifth node; and sending information for data access to the second node, where the information for data access includes information indicating a requirement that needs to be met by the second node for accessing data of the fifth node and information indicating to obtain data of the fifth node.

In a possible design scheme, the communication method according to the eighth aspect may further include: receiving the information for data access from the fifth node.

In a possible design scheme, the information indicating to obtain data of the fifth node includes a storage address of encrypted data of the fifth node, and/or information indicating the encrypted data of the fifth node.

In a possible design scheme, the data of the fifth node may be encrypted by using a second key, and the information indicating to obtain data of the fifth node may further include the encrypted second key.

In a possible design scheme, the communication method according to the eighth aspect may further include: receiving information indicating an access record of the second node from the fifth node.

For technical effects of the method according to the seventh aspect or the eighth aspect, refer to related descriptions of technical effects of the method according to the sixth aspect. Details are not described herein again.

According to a ninth aspect, a communication method is provided. The method may be performed by a blockchain node, or may be performed by a component of the blockchain node, for example, a processor, a chip, or a chip system of the blockchain node, or may be implemented by a logic module or software that can implement all or a part of functions of the blockchain node. The method includes: receiving an eighth request from a second node, where the eighth request is used to request to call a first smart contract, and the first smart contract is used to determine whether the second node can access data of a fifth node; and determining, based on the eighth request and the first smart contract, whether the second node can access data of the fifth node.

According to the communication method, the blockchain node may call the smart contract based on the request of the second node, to perform data access control on the second node, improving data access reliability and security, and enhancing service security. For an implementation process of deploying the first smart contract by the blockchain node, refer to related implementations in the method according to the third aspect. Details are not described herein again.

In a possible design scheme, the eighth request may include attribute information corresponding to the second node.

In a possible design scheme, the attribute information corresponding to the second node may include an attribute corresponding to the second node and a signature of a fourth node related to the attribute corresponding to the second node.

In a possible design scheme, the communication method according to the ninth aspect may further include: sending a first key to the second node when the second node can access data of the fifth node, where the first key is used to decrypt encrypted data of the fifth node.

In a possible design scheme, the communication method according to the ninth aspect may further include: receiving information for data access from the fifth node, where the information for data access includes information indicating a requirement that needs to be met by the second node for accessing data of the fifth node and information indicating to obtain data of the fifth node.

In a possible design scheme, the communication method according to the ninth aspect may further include: receiving a fourth request from the second node, where the fourth request is used to request to obtain information for accessing data of the fifth node; and sending the information for data access to the second node.

In a possible design scheme, the information indicating to obtain data of the fifth node may include a storage address of the encrypted data of the fifth node, and/or information indicating the encrypted data of the fifth node.

In a possible design scheme, the data of the fifth node is encrypted by using a second key, and the information indicating to obtain data of the fifth node may further include the encrypted second key.

In a possible design scheme, the communication method according to the ninth aspect may further include: generating and recording an access status of the fifth node when the second node can access data of the fifth node.

According to a tenth aspect, a communication method is provided. The method may be performed by a second node, or may be performed by a component of the second node, for example, a processor, a chip, or a chip system of the second node, or may be implemented by a logic module or software that can implement all or a part of functions of the second node. The method includes: generating an eighth request; and sending the eighth request to a blockchain node, where the eighth request is used to request to call a first smart contract, and the first smart contract is used to determine whether the second node can access data of a fifth node.

In a possible design scheme, the eighth request may include attribute information corresponding to the second node.

In a possible design scheme, the attribute information corresponding to the second node may include an attribute corresponding to the second node and a signature of a fourth node related to the attribute corresponding to the second node.

In a possible design scheme, the communication method according to the tenth aspect may further include: receiving a first key from the blockchain node, where the first key is used to decrypt encrypted data of the fifth node.

In a possible design scheme, the communication method according to the tenth aspect may further include: sending a fourth request to the blockchain node, where the fourth request is used to request to obtain information for accessing data of the fifth node; receiving information for data access from the blockchain node, where the information for data access includes information indicating a requirement that needs to be met by the second node for accessing data of the fifth node and information indicating to obtain data of the fifth node; obtaining the encrypted data of the fifth node based on the information for data access; and decrypting the encrypted data of the fifth node based on the first key.

In a possible design scheme, the information indicating to obtain data of the fifth node may include a storage address of the encrypted data of the fifth node, and/or information indicating the encrypted data of the fifth node.

In a possible design scheme, the data of the fifth node is encrypted by using a second key, and the information indicating to obtain data of the fifth node may further include the encrypted second key.

In a possible design scheme, obtaining the encrypted data of the fifth node based on the information for data access may include: sending a seventh request to a storage node corresponding to the storage address, where the seventh request is used to request to obtain data of the fifth node; and receiving the encrypted data of the fifth node from the storage node.

In a possible design scheme, decrypting the encrypted data of the fifth node based on the first key may include: decrypting the encrypted second key based on the first key; and decrypting, based on the second key, the data of the fifth node encrypted by using the second key.

For technical effects of the method according to the ninth aspect or the tenth aspect, refer to related descriptions of technical effects of the method according to the sixth aspect. Details are not described herein again.

According to an eleventh aspect, a communication apparatus is provided to implement the foregoing methods. The communication apparatus may be the first node in the first aspect, or an apparatus including the first node, or an apparatus included in the first node, such as a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to obtain attribute information. The transceiver module is configured to send attribute information to a second node, where the attribute information indicates an attribute corresponding to the proven second node.

In a possible design scheme, that the processing module is configured to obtain attribute information may include: The processing module is configured to control the transceiver module to receive a first request from the second node, where the first request is used to request to obtain an attribute; and the processing module is configured to control the transceiver module to send the attribute information to the second node based on the first request.

In a possible design scheme, that the processing module is configured to control the transceiver module to send the attribute information to the second node based on the first request may include: The processing module is configured to generate the attribute information by using a smart contract based on the first request, where the smart contract is associated with an attribute endorsement service; and the processing module is configured to control the transceiver module to send the attribute information to the second node.

In a possible design scheme, the transceiver module is further configured to receive a fifth request from a fourth node, where the fifth request is used to request installation of the smart contract; and the processing module is further configured to install the smart contract based on the fifth request.

In a possible design scheme, that the processing module is further configured to install the smart contract based on the fifth request may include: The processing module is configured to control the transceiver module to send second information to the first node based on the fifth request, where the second information indicates whether installation of the smart contract is supported; and the processing module is configured to control the transceiver module to receive third information from the fourth node, where the third information indicates to install the smart contract, and the third information is determined based on the second information corresponding to at least one blockchain node on a blockchain.

In a possible design scheme, when a result indicating whether installation of the smart contract is supported is recorded by the first node on the blockchain, the second information may include an address, on the blockchain, of the result indicating whether installation of the smart contract is supported.

In a possible design scheme, the third information may include a result indicating whether installation of the smart contract is supported corresponding to at least one blockchain node on the blockchain, and/or an address, on the blockchain, of the result indicating whether installation of the smart contract is supported corresponding to the at least one blockchain node.

In a possible design scheme, the transceiver module is further configured to receive fourth information from the first node, where the fourth information indicates usage information of the smart contract.

In a possible design scheme, the fourth information may include at least one of the following: an attribute endorsement service corresponding to the smart contract, an address of the smart contract, an input parameter of the smart contract, an output parameter of the smart contract, or an application template for the attribute information.

In a possible design scheme, the transceiver module is further configured to send the attribute information to a blockchain node; and the transceiver module is further configured to receive first information from the blockchain node, where the first information indicates an address of the attribute information on a blockchain.

In a possible design scheme, the first request may include at least one of the following: an identifier of the second node, information indicating a type of the attribute requested to be obtained, identity proof information corresponding to the second node, or a signature of a third node on identity proof information corresponding to the second node.

In a possible design scheme, the attribute information may include the attribute corresponding to the second node and a signature of a fourth node related to the attribute corresponding to the second node.

In a possible design scheme, the attribute information may further include at least one of the following: an issuance time of the attribute, a validity period of the attribute, the identifier of the second node, or a signature of a blockchain node on the attribute corresponding to the second node.

In a possible design scheme, the transceiver module is further configured to send first information to the second node, where the first information indicates the address of the attribute information on the blockchain.

In a possible design scheme, the transceiver module may include a receiving module and a sending module. The sending module is configured to implement a sending function of the communication apparatus according to the eleventh aspect, and the receiving module is configured to implement a receiving function of the communication apparatus according to the eleventh aspect.

In a possible design scheme, the communication apparatus according to the eleventh aspect may further include a storage module, and the storage module stores a program or instructions. When the processing module executes the program or the instructions, the communication apparatus according to the eleventh aspect is caused to perform the method according to the first aspect.

According to a twelfth aspect, a communication apparatus is provided to implement the foregoing methods. The communication apparatus may be the second node in the second aspect, or an apparatus including the second node, or an apparatus included in the second node, such as a chip. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive attribute information from a first node, where the attribute information indicates an attribute corresponding to the proven second node. The processing module is configured to determining the attribute corresponding to the second node based on the attribute information.

In a possible design scheme, the attribute information may include the attribute corresponding to the second node and a signature of a fourth node related to the attribute corresponding to the second node.

In a possible design scheme, the attribute information may further include at least one of the following: an issuance time of the attribute, a validity period of the attribute, an identifier of the second node, or a signature of a blockchain node on the attribute corresponding to the second node.

In a possible design scheme, the transceiver module is further configured to receive first information from the first node, where the first information indicates an address of the attribute information on a blockchain.

In a possible design scheme, the transceiver module is further configured to send a first request to the first node, where the first request is used to request to obtain an attribute.

In a possible design scheme, the transceiver module may include a receiving module and a sending module. The sending module is configured to implement a sending function of the communication apparatus according to the twelfth aspect, and the receiving module is configured to implement a receiving function of the communication apparatus according to the twelfth aspect.

In a possible design scheme, the communication apparatus according to the twelfth aspect may further include a storage module, and the storage module stores a program or instructions. When the processing module executes the program or the instructions, the communication apparatus according to the twelfth aspect is caused to perform the method according to the second aspect.

According to a thirteenth aspect, a communication apparatus is provided to implement the foregoing methods. The communication apparatus may be the blockchain node in the third aspect, or an apparatus including the blockchain node, or an apparatus included in the blockchain node, such as a chip. The communication apparatus includes a corresponding module, unit, or means (means) for implementing the method according to the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive a fifth request from a fourth node, where the fifth request is used to request installation of a smart contract corresponding to an attribute endorsement service supported by the fourth node. The processing module is configured to install the smart contract based on the fifth request.

In a possible design scheme, that the processing module is configured to install the smart contract based on the fifth request may include: The processing module is configured to control the transceiver module to send second information to the fourth node based on the fifth request, where the second information indicates whether installation of the smart contract is supported; and the processing module is configured to control the transceiver module to receive third information from the fourth node, where the third information indicates to install the smart contract, and the third information is determined based on the second information corresponding to at least one blockchain node on a blockchain.

In a possible design scheme, when a result indicating whether installation of the smart contract is supported is recorded by the blockchain node on the blockchain, the second information may include an address, on the blockchain, of the result indicating whether installation of the smart contract is supported.

In a possible design scheme, the third information may include a result indicating whether installation of the smart contract is supported corresponding to at least one blockchain node on the blockchain, and/or an address, on the blockchain, of the result indicating whether installation of the smart contract is supported corresponding to the at least one blockchain node.

In a possible design scheme, the transceiver module is further configured to receive fourth information from the first node, where the fourth information indicates usage information of the smart contract.

In a possible design scheme, the fourth information may include at least one of the following: an attribute endorsement service corresponding to the smart contract, an address of the smart contract, an input parameter of the smart contract, an output parameter of the smart contract, or an application template for the attribute information.

In a possible design scheme, the transceiver module may include a receiving module and a sending module. The sending module is configured to implement a sending function of the communication apparatus according to the thirteenth aspect, and the receiving module is configured to implement a receiving function of the communication apparatus according to the thirteenth aspect.

In a possible design scheme, the communication apparatus according to the thirteenth aspect may further include a storage module, and the storage module stores a program or instructions. When the processing module executes the program or the instructions, the communication apparatus according to the thirteenth aspect is caused to perform the method according to the third aspect.

According to a fourteenth aspect, a communication apparatus is provided to implement the foregoing methods. The communication apparatus may be the fourth node in the fourth aspect, or an apparatus including the fourth node, or an apparatus included in the fourth node, such as a chip. The communication apparatus includes a corresponding module, unit, or means (means) for implementing the method according to the fourth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate a fifth request, where the fifth request is used to request installation of a smart contract corresponding to an attribute endorsement service supported by the fourth node The transceiver module is configured to send the fifth request to a blockchain node.

In a possible design scheme, the transceiver module is further configured to receive second information from the blockchain node, where the second information indicates whether installation of the smart contract is supported; and the transceiver module is further configured to send third information to the blockchain node, where the third information indicates to install the smart contract, and the third information is determined based on the second information corresponding to at least one blockchain node on a blockchain.

In a possible design scheme, when a result indicating whether installation of the smart contract is supported is recorded by the blockchain node on the blockchain, the second information may include an address, on the blockchain, of the result indicating whether installation of the smart contract is supported.

In a possible design scheme, the third information may include a result indicating whether installation of the smart contract is supported corresponding to at least one blockchain node on the blockchain, and/or an address, on the blockchain, of the result indicating whether installation of the smart contract is supported corresponding to the at least one blockchain node.

In a possible design scheme, the transceiver module is further configured to send fourth information to the blockchain node, where the fourth information indicates usage information of the smart contract.

In a possible design scheme, the fourth information may include at least one of the following: an attribute endorsement service corresponding to the smart contract, an address of the smart contract, an input parameter of the smart contract, or an output parameter of the smart contract.

In a possible design scheme, the transceiver module is further configured to receive a first request from a second node, where the first request is used to request to obtain an attribute; and the transceiver module is further configured to send attribute information to the second node based on the first request.

In a possible design scheme, the attribute information may include an attribute corresponding to the second node and a signature of a fourth node related to the attribute corresponding to the second node.

In a possible design scheme, the attribute information may further include at least one of the following: an issuance time of the attribute, a validity period of the attribute, an identifier of the second node, or a signature of a blockchain node on the attribute corresponding to the second node.

In a possible design scheme, the transceiver module is further configured to receive first information from a blockchain node, where the first information indicates an address of the attribute information on the blockchain.

In a possible design scheme, the transceiver module may include a receiving module and a sending module. The sending module is configured to implement a sending function of the communication apparatus according to the fourteenth aspect, and the receiving module is configured to implement a receiving function of the communication apparatus according to the fourteenth aspect.

In a possible design scheme, the communication apparatus according to the fourteenth aspect may further include a storage module, and the storage module stores a program or instructions. When the processing module executes the program or the instructions, the communication apparatus according to the fourteenth aspect is caused to perform the method according to the fourth aspect.

According to a fifteenth aspect, a communication apparatus is provided to implement the foregoing methods. The communication apparatus may be the operator node in the fifth aspect, or an apparatus including the operator node, or an apparatus included in the operator node, such as a chip. The communication apparatus includes a corresponding module, unit, or means (means) for implementing the method according to the fifth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to determine that a first terminal device and a second terminal device access a network corresponding to the operator node. The transceiver module is configured to send an attribute corresponding to the second terminal device to the first terminal device when determining that the first terminal device receives a call request of the second terminal device.

In a possible design scheme, the transceiver module is further configured to send a sixth request to a blockchain node, where the sixth request is used to request to obtain the attribute corresponding to the second terminal device; and the transceiver module is further configured to receive attribute information corresponding to the second terminal device from the blockchain node, where the attribute information corresponding to the second terminal device includes the attribute corresponding to the second terminal device and a signature of a fourth node related to the attribute corresponding to the second terminal device.

In a possible design scheme, the attribute information corresponding to the second terminal device may further include an identifier of the second terminal device and/or a signature of the blockchain node on the attribute corresponding to the second terminal device.

In a possible design scheme, the transceiver module may include a receiving module and a sending module. The sending module is configured to implement a sending function of the communication apparatus according to the fifteenth aspect, and the receiving module is configured to implement a receiving function of the communication apparatus according to the fifteenth aspect.

In a possible design scheme, the communication apparatus according to the fifteenth aspect may further include a storage module, and the storage module stores a program or instructions. When the processing module executes the program or the instructions, the communication apparatus according to the fifteenth aspect is caused to perform the method according to the fifth aspect.

According to a sixteenth aspect, a communication apparatus is provided to implement the foregoing methods. The communication apparatus may be the fifth node in the sixth aspect, or an apparatus including the fifth node, or an apparatus included in the fifth node, such as a chip. The communication apparatus includes a corresponding module, unit, or means (means) for implementing the method according to the sixth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive a second request from a second node, where the second request is used to request to access data of the fifth node, and the second request includes attribute information corresponding to the second node. The processing module is configured to determine, based on the attribute information corresponding to the second node and proof information, whether the second node meets a requirement for accessing data of the fifth node, where the proof information is used to verify an attribute corresponding to the second node.

In a possible design scheme, the second request may further include an address, on a blockchain, of the attribute information corresponding to the second node.

In a possible design scheme, the transceiver module is further configured to send a third request to a blockchain node, where the third request is used to request to obtain the proof information; and receive the proof information from the blockchain node.

In a possible design scheme, the proof information may include credential information of a fourth node related to the attribute corresponding to the second node.

In a possible design scheme, the proof information may further include: a hash of the attribute corresponding to the second node, and/or the attribute corresponding to the second node.

In a possible design scheme, that the transceiver module is configured to receive a second request from a second node may include: The transceiver module is configured to receive identification information from the second node, where the identification information includes an identifier of the second node and a signature of a first node related to the identifier of the second node; the transceiver module is configured to determine to establish secure authentication with the second node under control of the processing module when the identifier of the second node is verified; and the transceiver module is configured to receive the second request from the second node when the secure authentication is completed.

In a possible design scheme, the transceiver module is further configured to send information for data access to a blockchain node, where the information for data access includes information indicating a requirement that needs to be met by the second node for accessing data of the fifth node and information indicating to obtain data of the fifth node.

In a possible design scheme, the transceiver module is further configured to send a first key to the second node when the second node meets the requirement for accessing data of the fifth node, where the first key is determined based on the attribute corresponding to the second node, and the first key is used to decrypt encrypted data of the fifth node.

In a possible design scheme, the information indicating to obtain data of the fifth node may include a storage address of the encrypted data of the fifth node, and/or information indicating the encrypted data of the fifth node.

In a possible design scheme, the data of the fifth node may be encrypted by using a second key, the information indicating to obtain data of the fifth node may further include the encrypted second key, and the first key is specifically used to decrypt the encrypted second key.

In a possible design scheme, the transceiver module is further configured to send the encrypted data of the fifth node to a storage node corresponding to the storage address.

In a possible design scheme, the transceiver module is further configured to send, to a blockchain node, information indicating an access record of the second node.

In a possible design scheme, the attribute information corresponding to the second node may include the attribute corresponding to the second node and a signature of a fourth node associated with the attribute corresponding to the second node.

In a possible design scheme, the transceiver module may include a receiving module and a sending module. The sending module is configured to implement a sending function of the communication apparatus according to the sixteenth aspect, and the receiving module is configured to implement a receiving function of the communication apparatus according to the sixteenth aspect.

In a possible design scheme, the communication apparatus according to the sixteenth aspect may further include a storage module, and the storage module stores a program or instructions. When the processing module executes the program or the instructions, the communication apparatus according to the sixteenth aspect is caused to perform the method according to the sixth aspect.

According to a seventeenth aspect, a communication apparatus is provided to implement the foregoing methods. The communication apparatus may be the second node in the seventh aspect, or an apparatus including the second node, or an apparatus included in the second node, such as a chip. The communication apparatus includes a corresponding module, unit, or means (means) for implementing the method according to the seventh aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate a second request, where the second request is used to request to access data of a fifth node, and the second request includes attribute information corresponding to the second node. The transceiver module is configured to send the second request to the fifth node.

In a possible design scheme, the second request may further include an address, on a blockchain, of the attribute information corresponding to the second node.

In a possible design scheme, that the transceiver module is configured to send the second request to the fifth node may include: The transceiver module is configured to establish secure authentication with the fifth node based on an identifier of the second node under control of the processing module; and the transceiver module is configured to send the second request to the fifth node when the secure authentication is completed.

In a possible design scheme, the transceiver module is further configured to receive a first key from the fifth node, where the first key is determined based on an attribute corresponding to the second node, and the first key is used to decrypt encrypted data of the fifth node.

In a possible design scheme, the transceiver module is further configured to send a fourth request to a blockchain node, where the fourth request is used to request to obtain information for accessing data of the fifth node; and the transceiver module is further configured to receive information for data access from the blockchain node, where the information for data access includes information indicating a requirement that needs to be met by the second node for accessing data of the fifth node and information indicating to obtain data of the fifth node. The processing module is further configured to obtain the encrypted data of the fifth node based on the information for data access; and the processing module is further configured to decrypt the encrypted data of the fifth node based on the first key.

In a possible design scheme, the information indicating to obtain data of the fifth node may include a storage address of the encrypted data of the fifth node, and/or information indicating the encrypted data of the fifth node.

In a possible design scheme, the data of the fifth node may be encrypted by using a second key, the information indicating to obtain data of the fifth node may further include the encrypted second key, and the first key is specifically used to decrypt the encrypted second key.

In a possible design scheme, that the processing module is further configured to obtain the encrypted data of the fifth node based on the information for data access may include: The processing module is configured to control the transceiver module to send a seventh request to a storage node corresponding to the storage address, where the seventh request is used to request to obtain data of the fifth node; and the processing module is configured to control the transceiver module to receive the encrypted data of the fifth node from the storage node.

In a possible design scheme, that the processing module is configured to control the transceiver module to decrypt the encrypted data of the fifth node based on the first key may include: The processing module is configured to control the transceiver module to decrypt the encrypted second key based on the first key; and decrypt, based on the second key, the data of the fifth node encrypted by using the second key.

In a possible design scheme, the attribute information corresponding to the second node includes the attribute corresponding to the second node and a signature of a fourth node associated with the attribute corresponding to the second node.

In a possible design scheme, the transceiver module may include a receiving module and a sending module. The sending module is configured to implement a sending function of the communication apparatus according to the seventeenth aspect, and the receiving module is configured to implement a receiving function of the communication apparatus according to the seventeenth aspect.

In a possible design scheme, the communication apparatus according to the seventeenth aspect may further include a storage module, and the storage module stores a program or instructions. When the processing module executes the program or the instructions, the communication apparatus according to the seventeenth aspect is caused to perform the method according to the seventh aspect.

According to an eighteenth aspect, a communication apparatus is provided to implement the foregoing methods. The communication apparatus may be the blockchain node in the eighth aspect, or an apparatus including the blockchain node, or an apparatus included in the blockchain node, such as a chip. The communication apparatus includes a corresponding module, unit, or means (means) for implementing the method according to the eighth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to receive a fourth request from a second node, where the fourth request is used to request to obtain information for accessing data of a fifth node; and the processing module is configured to control the transceiver module to send information for data access to the second node, where the information for data access includes information indicating a requirement that needs to be met by the second node for accessing data of the fifth node and information indicating to obtain data of the fifth node.

In a possible design scheme, the transceiver module is configured to receive the information for data access from the fifth node.

In a possible design scheme, the information indicating to obtain data of the fifth node may include a storage address of encrypted data of the fifth node, and/or information indicating the encrypted data of the fifth node.

In a possible design scheme, the data of the fifth node may be encrypted by using a second key, and the information indicating to obtain data of the fifth node may further include the encrypted second key.

In a possible design scheme, the transceiver module is further configured to receive information indicating an access record of the second node from the fifth node.

In a possible design scheme, the transceiver module may include a receiving module and a sending module. The sending module is configured to implement a sending function of the communication apparatus according to the eighteenth aspect, and the receiving module is configured to implement a receiving function of the communication apparatus according to the eighteenth aspect.

In a possible design scheme, the communication apparatus according to the eighteenth aspect may further include a storage module, and the storage module stores a program or instructions. When the processing module executes the program or the instructions, the communication apparatus according to the eighteenth aspect is caused to perform the method according to the eighth aspect.

According to a nineteenth aspect, a communication apparatus is provided to implement the foregoing methods. The communication apparatus may be the blockchain node in the ninth aspect, or an apparatus including the blockchain node, or an apparatus included in the blockchain node, such as a chip. The communication apparatus includes a corresponding module, unit, or means (means) for implementing the method according to the ninth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive an eighth request from a second node, where the eighth request is used to request to call a first smart contract, and the first smart contract is used to determine whether the second node can access data of a fifth node. The processing module is configured to determine, based on the eighth request and the first smart contract, whether the second node can access data of the fifth node.

In a possible design scheme, the eighth request may include attribute information corresponding to the second node.

In a possible design scheme, the attribute information corresponding to the second node may include an attribute corresponding to the second node and a signature of a fourth node related to the attribute corresponding to the second node.

In a possible design scheme, the transceiver module is further configured to send a first key to the second node when the second node can access data of the fifth node, where the first key is used to decrypt encrypted data of the fifth node.

In a possible design scheme, the transceiver module is further configured to receive information for data access from the fifth node, where the information for data access includes information indicating a requirement that needs to be met by the second node for accessing data of the fifth node and information indicating to obtain data of the fifth node.

In a possible design scheme, the transceiver module is further configured to receive a fourth request from the second node, where the fourth request is used to request to obtain information for accessing data of the fifth node; and the transceiver module is further configured to send the information for data access to the second node.

In a possible design scheme, the information indicating to obtain data of the fifth node may include a storage address of the encrypted data of the fifth node, and/or information indicating the encrypted data of the fifth node.

In a possible design scheme, the data of the fifth node is encrypted by using a second key, and the information indicating to obtain data of the fifth node may further include the encrypted second key.

In a possible design scheme, the processing module is further configured to generate and record an access status of the fifth node when the second node can access data of the fifth node.

In a possible design scheme, the transceiver module may include a receiving module and a sending module. The sending module is configured to implement a sending function of the communication apparatus according to the nineteenth aspect, and the receiving module is configured to implement a receiving function of the communication apparatus according to the nineteenth aspect.

In a possible design scheme, the communication apparatus according to the nineteenth aspect may further include a storage module, and the storage module stores a program or instructions. When the processing module executes the program or the instructions, the communication apparatus according to the nineteenth aspect is caused to perform the method according to the ninth aspect.

According to a twentieth aspect, a communication apparatus is provided to implement the foregoing methods. The communication apparatus may be the second node in the tenth aspect, or an apparatus including the second node, or an apparatus included in the second node, such as a chip. The communication apparatus includes a corresponding module, unit, or means (means) for implementing the method according to the tenth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate an eighth request, where the eighth request is used to request to call a first smart contract, and the first smart contract is used to determine whether the second node can access data of a fifth node. The transceiver module is configured to send the eighth request to a blockchain node.

In a possible design scheme, the eighth request may include attribute information corresponding to the second node.

In a possible design scheme, the attribute information corresponding to the second node may include an attribute corresponding to the second node and a signature of a fourth node related to the attribute corresponding to the second node.

In a possible design scheme, the transceiver module is further configured to receive a first key from the blockchain node, where the first key is used to decrypt encrypted data of the fifth node.

In a possible design scheme, the transceiver module is further configured to send a fourth request to the blockchain node, where the fourth request is used to request to obtain information for accessing data of the fifth node; and the transceiver module is further configured to receive information for data access from the blockchain node, where the information for data access includes information indicating a requirement that needs to be met by the second node for accessing data of the fifth node and information indicating to obtain data of the fifth node. The processing module is further configured to obtain the encrypted data of the fifth node based on the information for data access; and the processing module is further configured to decrypt the encrypted data of the fifth node based on the first key.

In a possible design scheme, the information indicating to obtain data of the fifth node may include a storage address of the encrypted data of the fifth node, and/or information indicating the encrypted data of the fifth node.

In a possible design scheme, the data of the fifth node is encrypted by using a second key, and the information indicating to obtain data of the fifth node may further include the encrypted second key.

In a possible design scheme, that the processing module is further configured to obtain the encrypted data of the fifth node based on the information for data access may include: The processing module is configured to control the transceiver module to send a seventh request to a storage node corresponding to the storage address, where the seventh request is used to request to obtain data of the fifth node; and the processing module is configured to control the transceiver module to receive the encrypted data of the fifth node from the storage node.

In a possible design scheme, that the processing module is further configured to decrypt the encrypted data of the fifth node based on the first key may include: The processing module is configured to decrypt the encrypted second key based on the first key; and the processing module is configured to decrypt, based on the second key, the data of the fifth node encrypted by using the second key.

In a possible design scheme, the transceiver module may include a receiving module and a sending module. The sending module is configured to implement a sending function of the communication apparatus according to the twentieth aspect, and the receiving module is configured to implement a receiving function of the communication apparatus according to the twentieth aspect.

In a possible design scheme, the communication apparatus according to the twentieth aspect may further include a storage module, and the storage module stores a program or instructions. When the processing module executes the program or the instructions, the communication apparatus according to the twentieth aspect is caused to perform the method according to the tenth aspect.

According to a twenty-first aspect, a communication apparatus is provided (for example, the communication apparatus may be a chip or a chip system). The communication apparatus includes a processor, configured to implement functions in any one of the first aspect to the tenth aspect.

In a possible design scheme, the communication apparatus may further include a memory, and the memory is configured to store necessary program instructions and data. The processor is coupled to the memory, and the processor is configured to execute a computer program or instructions stored in the memory, to cause the communication apparatus to perform the method according to any one of the first aspect to the tenth aspect.

In a possible design scheme, the communication apparatus according to the twenty-first aspect may further include a transceiver. The transceiver may be a transceiver circuit or an interface circuit. The transceiver may be used by the communication apparatus according to the twenty-first aspect to communicate with another communication apparatus.

In a possible design scheme, the processor may be integrated with the memory.

In some possible designs, when the apparatus is a chip system, the apparatus may include a chip, or may include a chip and another discrete component.

According to a twenty-second aspect, a communication apparatus is provided. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method according to any one of the first aspect to the tenth aspect by using a logic circuit or by executing code instructions.

According to a twenty-third aspect, a communication apparatus is provided. The communication apparatus may be a first node, or may be modules or units (for example, a chip, a chip system, or a circuit), in the first node, that are in one-to-one correspondence with and configured to perform the methods/operations/steps/actions described in the first aspect, or may be used in conjunction with the first node. Alternatively, the communication apparatus may be a second node, or may be modules or units (for example, a chip, a chip system, or a circuit), in the second node, that are in one-to-one correspondence with and configured to perform the methods/operations/steps/actions described in the second aspect or the seventh aspect or the tenth aspect, or may be used in conjunction with the second node. Alternatively, the communication apparatus may be a first node, or may be modules or units (for example, a chip, a chip system, or a circuit), in the first node, that are in one-to-one correspondence with and configured to perform the methods/operations/steps/actions described in the fourth aspect, or may be used in conjunction with the first node. Alternatively, the communication apparatus may be a blockchain node, or may be modules or units (for example, a chip, a chip system, or a circuit), in the blockchain node, that are in one-to-one correspondence with and configured to perform the methods/operations/steps/actions described in the third aspect or the eighth aspect or the ninth aspect, or may be used in conjunction with the blockchain node. Alternatively, the communication apparatus may be an operator node, or may be modules or units (for example, a chip, a chip system, or a circuit), in the operator node, that are in one-to-one correspondence with and configured to perform the methods/operations/steps/actions described in the fifth aspect, or may be used in conjunction with the operator node. Alternatively, the communication apparatus may be a fifth node, or may be modules or units (for example, a chip, a chip system, or a circuit), in the fifth node, that are in one-to-one correspondence with and configured to perform the methods/operations/steps/actions described in the sixth aspect, or may be used in conjunction with the fifth node.

It may be understood that when the communication apparatus according to any one of the twenty-first aspect to the twenty-third aspect is a chip, the foregoing sending action/function may be understood as an output, and the foregoing receiving action/function may be understood as an input.

According to a twenty-fourth aspect, a communication chip is provided. The communication chip stores instructions, and when the communication chip runs on a communication device, the method according to any one of the first aspect to the tenth aspect is implemented.

According to a twenty-fifth aspect, a computer-readable storage medium is provided. The computer-readable storage medium stores a computer program or instructions. When the computer program or the instructions are run on a communication apparatus, the communication apparatus is caused to perform the method according to any one of the first aspect to the tenth aspect.

According to a twenty-sixth aspect, a computer program product including instructions is provided. The computer program product includes computer program code, and when the computer program code runs on a communication apparatus, the communication apparatus is caused to perform the method according to any one of the first aspect to the tenth aspect.

According to a twenty-seventh aspect, a communication system is provided, including a communication apparatus configured to implement the method according to the first aspect and a communication apparatus configured to implement the method according to the second aspect.

According to a twenty-eighth aspect, a communication system is provided, including a communication apparatus configured to implement the method according to the third aspect and a communication apparatus configured to implement the method according to the fourth aspect.

According to a twenty-ninth aspect, a communication system is provided, including a communication apparatus configured to implement the method according to the fifth aspect.

According to a thirtieth aspect, a communication system is provided, including a communication apparatus configured to implement the method according to the sixth aspect, a communication apparatus configured to implement the method according to the seventh aspect, and a communication apparatus configured to implement the method according to the eighth aspect.

According to a thirty-first aspect, a communication system is provided, including a communication apparatus configured to implement the method according to the ninth aspect and a communication apparatus configured to implement the method according to the tenth aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a schematic flowchart of still another communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

All aspects, embodiments, or features are presented in embodiments of this application by describing a system that may include multiple devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a worldwide interoperability for microwave access (worldwide interoperability for microwave access, WiMAX) communication system, 4th generation (4th generation, 4G) mobile communication systems such as a long term evolution (long term evolution, LTE) system, a worldwide interoperability for microwave access (worldwide interoperability for microwave access, WiMAX) communication system, 5G (fifth generation, 5G) mobile communication systems such as a new radio (new radio, NR) system, and future communication systems such as a 6th generation (sixth generation, 6G) mobile communication system.

For ease of understanding, the following first describes technical terms in embodiments of this application.
1. Blockchain (blockchain): A distributed ledger integrating multiple technologies such as a cryptography technology, a peer-to-peer (peer-to-peer, P2P) network, and a distributed database. As an open and transparent decentralization technology, the blockchain transforms a conventional authority center and conventional centralized trust into group consensus and decentralized trust respectively, and constructs a tamper-proof distributed ledger secured by cryptography technologies.
2. Smart contract (smart contract): A computer protocol, with computers serving as a main tool, that embeds mathematical algorithms into programs to verify whether an event meets agreed conditions and ensure that all parties reach consensus within an agreed time frame in accordance with agreed conditions, to verify and execute contract terms. Simply put, the smart contract is a computer program that can automatically execute contract terms without third-party intervention.
   The smart contract employs mathematical algorithms to verify whether a transaction meets agreed conditions. For example, a contract specifies a condition: "A car needs to be transported from a place A to a place B." To ensure that the transaction specified in the contract occurs when the condition is met, a function or algorithm is needed to verify whether the contract meets the condition.
3. Consensus mechanism: The consensus mechanism is a vital mechanism to ensure blockchain security and reliability, and is implemented by employing an algorithm and a protocol between network nodes to ensure consistency of data and transactions on the blockchain across all nodes, preventing double spending and other malicious behaviors. The consensus mechanism can prevent nodes on a network from tampering with data or performing other malicious behaviors, making the blockchain more secure and reliable. The implementation of the consensus mechanism requires collaboration between multiple nodes, improving decentralization of the blockchain. Driven by the consensus mechanism, nodes do not need to trust any centralized authority, making the blockchain more decentralized and democratized. The consensus mechanism may be applied to digital currency, smart contract, supply chain management, medical record management, and the like, providing reliable technical support for the development and application of these fields. The implementation of the consensus mechanism requires digital technologies such as computers and networks. Therefore, the development and application of the consensus mechanism promote the development of the digital economy, and the continuous optimization and innovation of the consensus mechanism are to provide more reliable and secure technical support for the development of the digital economy.

As described in Background, a profile (profile) of a user in a telecommunication network service is strongly tied to the telecommunication network service, and lacks attribute information of the user. For example, a social attribute of the user identifies the user as an employee of a company. Therefore, the user identity is confined in the telecommunication network only, and the telecommunication network is unable to leverage credibility of a third party to enhance security. For example, in caller identification display of a user, information of a calling user is displayed as "express and food delivery" or "nuisance call". Such type of information may be used as attribute information of the user, but the information is generated based on feedback of big data, that is, based on tags fed back by other users. The user attribute information generated in this manner faces the following problems: 1. Poor authority: Malicious tagging of nuisance calls; and 2. Poor real-time performance: Tags are only applied after verification by multiple users.

In addition, absence of user attributes prevents users from supporting complex upper-layer applications, such as data access and authorization.

Therefore, embodiments of this application provide a communication method and apparatus. Attribute information is allocated to a user by providing an attribute endorsement service for the user, and access control on the user may be performed based on the attribute information, enhancing security of telecommunication network services, and implementing data access and authorization.

For ease of understanding of embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in multiple manners. By way of example rather than limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of multiple pieces of information that is pre-agreed on (for example, stipulated in a protocol), to reduce indication overheads to some extent. In addition, a common part of all information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when multiple pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into multiple pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. By way of example rather than limitation, the configuration information may include one or a combination of at least two of radio resource control (radio resource control, RRC) signaling, media access control (media access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, "first", "second", and various numbers in embodiments of this application are merely for differentiation for ease of description, but are not intended to limit the scope of embodiments of this application, for example, for distinguishing between different indication information. For another example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action during implementation; and do not mean any other limitation.

In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Specifically, the words such as "example" or "for example" are used to present a related concept in a specific manner for ease of understanding.

Finally, network architectures and service scenarios that are described in embodiments of this application are intended to describe the technical solutions in embodiments of this application more clearly, and do not constitute any limitation on the technical solutions provided in embodiments of this application. A person of ordinary skill in the art can know that, as the network architectures evolve and new service scenarios emerge, the technical solutions provided in embodiments of this application are also applicable to similar technical problems.

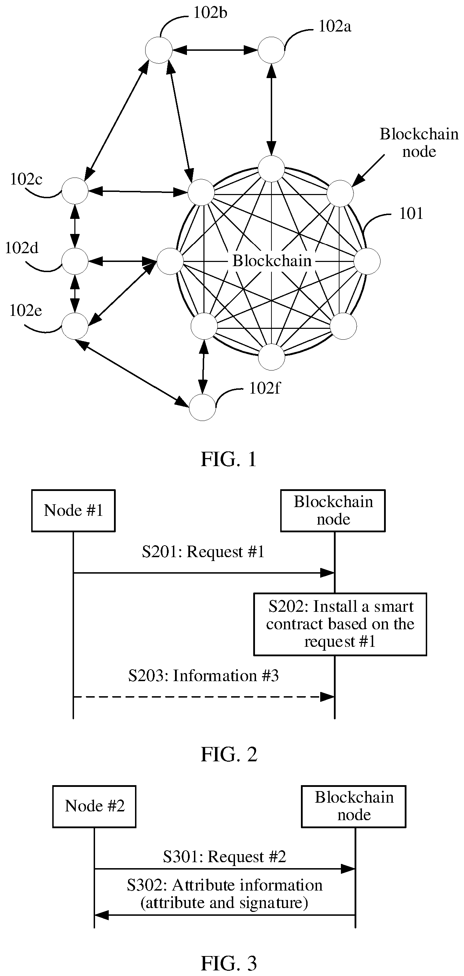

Refer to FIG. 1. FIG. 1 is a diagram of an architecture of a communication system according to an embodiment of this application. As shown in FIG. 1, the communication system includes a distributed system 101 and at least one of nodes 102a to 102f that interact with the distributed system. The distributed system includes a blockchain system, the blockchain system includes one or more blockchain nodes, and the blockchain nodes may communicate with each other.

The blockchain node may be a terminal device, an access network device, a network element or device in a core network, a server, a personal computer (personal computer, PC), a virtual machine (virtual machine, VM), an application container engine (docker), a blockchain appliance, or the like.

The nodes interacting with the distributed system may include a node that provides an attribute endorsement or proof service, a node that requests to obtain an attribute, a node that provides an operator service, a node that provides a data service, a node that provides an identity proof service, a node that provides a storage service, and the like. The nodes interacting with the distributed system may also communicate with each other. Communicating with each other may be direct or indirect communication. This is not limited herein. The node interacting with the distributed system may alternatively be a terminal device, an access network device, a network element or device in a core network, a server, a PC, a VM, an application container engine (docker), a blockchain appliance, or the like.

The node that provides an attribute endorsement or proof service may also be referred to as an attribute endorsement node, an endorsement node, or the like, and may be a device configured to implement a service of an organization or an institution (which may be referred to as a device corresponding to an organization or an institution for short), a device configured to provide a service of an operator (which may be referred to as a device corresponding to an operator for short), or a device configured to provide a service of an authority (which may be referred to as a device corresponding to an authority for short), a device configured to provide a service of a trusted third-party institution (which may be referred to as a device corresponding to a trusted third-party institution for short), a device corresponding to another organization or institution that can provide an attribute endorsement service, or the like.

The node that requests to obtain an attribute may also be referred to as an attribute applicant node, an attribute owner node, or the like, and may be a device corresponding to a user, a device corresponding to an organization or institution, or the like.

The node that provides an operator service may also be referred to as an operator node, an operator service node, or the like, and may be a device corresponding to an operator, for example, a server of an operator, a network element or device (for example, an operation, administration, and maintenance (operation administration and maintenance, OAM) network element) in a core network, an access network device, or a server.

The node that provides a data service may also be referred to as a data owner node, a data node, or the like, and may be a device that can provide a data service, such as a database or a server.

The node that provides an identity proof service may also be referred to as a proof node or an identity proof node, and may be a device corresponding to a trusted third-party institution, a device corresponding to an authority, or a device corresponding to another organization or institution that can provide identity proof.

The node that provides a storage service may also be referred to as a storage node, an off-chain storage node, or the like, and may be a device providing a data storage function, such as a server or a distributed storage system.

It should be understood that the blockchain node may be the node providing an attribute endorsement or proof service, the node requesting to obtain an attribute, the node providing an operator service, the node providing a data service, the node providing an identity proof service, the node providing a storage service, or the like, or may be co-located with the foregoing node. This is not limited herein.

The terminal device may be a terminal device having a transceiver function, or may be a chip or a chip system disposed in the terminal device. The terminal device may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or an electricity meter), an intelligent robot, a robot arm, workshop equipment, a wireless terminal in self driving, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a vehicle-mounted terminal, a road side unit (road side unit, RSU) having a terminal function, a flight device (for example, an intelligent robot, a hot air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device with a function of a terminal. For example, the terminal device may alternatively be a device that functions as a terminal in D2D communication.

A device form of the terminal device is not limited in embodiments of this application. An apparatus for implementing a function of a terminal device may be a terminal device, or may be an apparatus, for example, a chip system, that can support a terminal device to implement the function. The apparatus may be mounted in a terminal device or used in conjunction with a terminal device. In embodiments of this application, the chip system may include a chip, or may include a chip and another discrete component.

The access network device may also be referred to as an access network node, a radio access network (radio access network, RAN) node, a RAN entity, an access node, or the like, is located on a network side of the foregoing communication system, to help the terminal device implement wireless access, and is a device having a wireless transceiver function, or may be disposed in a chip or a chip system of the device. The access network device includes but is not limited to: a base station (base station), an evolved NodeB (evolved NodeB, eNodeB), an access point (access point, AP), a transmission reception point (transmission reception point, TRP or transmission point, TP), a next generation NodeB (next generation NodeB, gNB), a next generation base station in a 6G mobile communication system, a base station in a future mobile communication system, an access node in a Wi-Fi system, or the like. The access network device may be a macro base station, a micro base station, or an indoor base station, a relay node or a donor node, or a radio controller in an open radio access network (open radio access network, ORAN) or centralized radio access network (centralized radio access network, CRAN) scenario. Alternatively, the access network device may be one antenna panel or a group of antenna panels (including multiple antenna panels) of a base station in 5G, or may be a network node that forms a gNB, a TRP, a TP, or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), or an RSU having a base station function. Optionally, the access network device may alternatively be a server, a wearable device, a vehicle, a vehicle-mounted device, or the like. For example, an access network device in a V2X technology may be an RSU. All or a part of functions of the network device in this application may alternatively be implemented through a software function running on hardware, or implemented through a virtualized function instantiated on a platform (for example, a cloud platform). The access network device in this application may alternatively be a logical node, a logical module, or software that can implement all or a part of functions of the access network device.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as a network device in an access network RAN, or the CU may be classified as a network device in a CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be the access network device, or may be an apparatus that can support the access network device in implementing the function, for example, a chip system. The apparatus may be mounted in the access network device or used in conjunction with the access network device.

The network element or device in the core network is an apparatus that is deployed in the core network and that is configured to provide a service for a terminal device. In systems using different radio access technologies, core network elements with similar wireless communication functions may have different names. For example, when the method in embodiments of this application is applied to a 5G system, the core network device may be an access and mobility management function (access and mobility management function, AMF), a session management function (session management function, SMF), a user plane function (user plane function, UPF), or the like. The UPF network element processes user plane data. The AMF and the SMF process control plane signaling. When the method in embodiments of this application is applied to an LTE system, the core network device may be a mobility management entity (mobility management entity, MME). For ease of description only, in embodiments of this application, the foregoing apparatuses that may provide a service for the terminal device may be collectively referred to as core network elements, core network devices, network functions (network function, NF), or the like. This is not limited herein.

In addition, it should be understood that the communication system shown in FIG. 1 shows, as an example, nodes or devices of several functions or types. The communication system shown in FIG. 1 may further include nodes of another type, for example, a device or a node configured to implement a service of a card vendor or a terminal vendor. This is not limited herein.

It should be understood that, in embodiments of this application, names of nodes, modules, devices, or network elements in different scenarios, architectures, or systems, and names of communication interfaces between any two of the node, the module, the device, or the network element are provided as examples, and a possibility of a name change in a future communication system, scenario, or architecture is not excluded.

With reference to FIG. 2 to FIG. 7, the following describes in detail the communication method provided in embodiments of this application.

For example, FIG. 2 is a schematic flowchart of a communication method according to an embodiment of this application. The communication method is described by using communication between a blockchain node shown in FIG. 1 and a node (referred to as a node #1 hereinafter) providing an attribute endorsement or proof service as an example. Certainly, an entity for performing an action of the blockchain node in the method may alternatively be an apparatus/module in the blockchain node, for example, a chip, a processor, or a processing unit in the blockchain node. This is not limited herein. An entity for performing an action of the node #1 in the method may alternatively be an apparatus/module in the node #1, for example, a chip, a processor, or a processing unit in the node #1. This is not specifically limited herein.

As shown in FIG. 2, the communication method includes the following steps.

S201: A node #1 sends a request #1 to a blockchain node. Correspondingly, the blockchain node receives the request #1 from the node #1.

The request #1 is an installation request initiated by the node #1 for a smart contract related to an attribute endorsement or proof service. For example, the request #1 is used to request to install a smart contract corresponding to an attribute endorsement service supported by the node #1. In embodiments of this application, the request #1 may also be referred to as a fifth request, and the node #1 may also be referred to as a fourth node. In other words, the request #1 corresponds to the fifth request, and the node #1 corresponds to the fourth node.

Specifically, the request #1 may include an identifier of the node #1, an attribute endorsement service corresponding to the smart contract, and the smart contract. The identifier of the node #1 is information that uniquely identifies an identity of the node #1. For example, the identifier of the node #1 may be a decentralized root credential/trust credential (decentralized root credentials, DRC), a decentralized identity credential/trust credential (decentralized identity credentials, DIC), a decentralized self-control identity (decentralized self-control credentials, DSCC), a decentralized operator credential (decentralized operator credentials, DOC), or a self-control identity credential (self-control identity credential, SCIC). The DRC, the DIC, and the DSCC may all be referred to as a self-control identity (self-control identity, SCID). For another example, the identifier of the node #1 may be an identifier of an authentication certificate of the node #1.

The DRC is preset in a card by a card vendor or device vendor before delivery or is a root ID of an institution. The DIC is multiple temporary/derived identities derived from the DRC. The DSCC is generated by a user for control of identity information, and is independent of the DRC or DIC. The DOC may be credential information issued by an operator for a user. The SCIC is derived based on the DSCC. Each DRC, DIC, DSCC, or SCIC corresponds to file information. In other words, the DRC and the DIC may be possessed by both the user and the institution, and the DOC, the DSCC, and the SCIC may be unique to the user. It should be understood that, based on different node types, node identifiers are set differently. Setting of identifiers of the following nodes #2 to #4 is similar to setting of the identifier of the node #1, and details are not described subsequently.

In a possible implementation, the identifier of the node #1 may reuse an embedded universal integrated circuit card (embedded UICC, eUICC) form of a universal integrated circuit card (universal integrated circuit card, UICC) specified by the Global System for Mobile Communication Association (group speciale mobile association, GSMA). For example, the identifier of the node #1 may be "0x1234". The identifier of the node #1 herein is merely used as an example. In actual implementation, the identifier of the node #1 may be another possible implementation, and details are not described herein again.

The attribute endorsement service is a service used to provide attribute authentication or proof for a node (for example, a node #2). The attribute proof may include social attribute proof and objective attribute proof of the node. For example, the social attribute proof may include proof of employment, an education background, a real name authentication status, and the like of the node #2, and the objective attribute proof may include proof of a current location or a current age of the node #2, whether the node #2 has a specific permission, and the like. Therefore, a proven attribute is considered to be trusted and secure. In embodiments of this application, the node #1 may be a device that can provide an attribute endorsement service, for example, a device corresponding to an operator, a device corresponding to an authority, or a device corresponding to a trusted third-party institution, and may provide a proven attribute for a node served by the node #1. In embodiments of this application, the node #2 may also be referred to as a second node. In other words, the node #1 corresponds to the fourth node.

The smart contract corresponding to the attribute endorsement service means that the attribute endorsement service provided by the node #1 is installed or deployed in a form of a smart contract. One smart contract may correspond to one attribute endorsement service or one type of attribute endorsement service. In other words, the node #1 requests, by using the request #1, to install, on the blockchain node and in a form of a smart contract, an attribute endorsement service that can be provided by the node #1, so that the blockchain node provides an attribute endorsement service. It should be understood that the smart contract may be represented in a form of code or a program.

Optionally, the request #1 may further include a signature of the node #1 on the request #1, a signature of the node #1 on the smart contract, and the like, to prove authenticity and validity of information or a message. It should be understood that the node #1 may sign information or a message by using a private key of the node #1.

In a possible design 1, the node #1 may send the request #1 to a blockchain node. Therefore, based on a blockchain characteristic, the blockchain node (for example, a first blockchain node) receiving the request #1 may inform, through consensus, another blockchain node on a blockchain in which the blockchain node is located of the request #1, and all or a part of blockchain nodes on the blockchain may install the smart contract based on the request #1, so that the smart contract is installed on the blockchain.

In a possible design 2, the node #1 may separately send the request #1 to multiple blockchain nodes. Accordingly, the multiple blockchain nodes receiving the request #1 separately install the smart contract based on the request #1. In this case, there is no need to inform another blockchain node of the request #1 through consensus.

S202: The blockchain node installs the smart contract based on the request #1.

After receiving the request #1, the blockchain node may determine, based on the request #1, whether the smart contract can be installed currently, and select, based on a determining result, whether to install the smart contract. For example, the blockchain node may determine, based on a current installation resource, installation condition, and the like of the blockchain node, whether installation of the smart contract the request #1 indicates to install can be currently supported. If the current installation resource is abundant and the installation condition is good, the smart contract may be installed. Otherwise, the smart contract may not be installed.

Optionally, the blockchain node may further verify the request #1, and when the verification succeeds, determine whether the smart contract can be installed currently. On the contrary, when the verification fails, the blockchain node does not need to determine whether the smart contract can be installed currently. In this case, the blockchain node may consider that the request #1 is invalid. For example, the blockchain node may verify, by using a public key, the signature in the request #1, and when signature verification succeeds, determine, based on the installation resource, the installation condition, and the like, whether the smart contract can be installed.

In a possible design, after obtaining the request #1 and completing verification on the signature in the request #1, the blockchain node may first vote/select/determine, based on the request #1, whether installation of the smart contract is supported, and then return a voting/selection/determining result to the node #1. Then, the node #1 indicates, based on the voting/selection/determining result fed back by the blockchain node, whether the blockchain node installs the smart contract. It should be understood that the voting/selection/determining result may be determined by the blockchain node based on the foregoing installation resource, installation condition, and the like.

In this design, in a possible implementation, the blockchain node may send information #1 to the node #1 based on the request #1. Correspondingly, the node #1 receives the information #1 from the blockchain node. The information #1 indicates whether installation of the smart contract is supported. For example, the information #1 may include 1-bit indication information (which may also be referred to as an information element, a field, or an indication field) to indicate whether installation of the smart contract is supported. A bit value being 1 indicates that the blockchain node supports installation of the smart contract, and a bit value being 0 indicates that the blockchain node does not support installation of the smart contract. Alternatively, a bit value being 0 indicates that the blockchain node supports installation of the smart contract, and a bit value being 1 indicates that the blockchain node does not support installation of the smart contract. This is not limited. Optionally, the information #1 may further include a signature of the blockchain node on the result indicating whether installation of the smart contract is supported, to prove authenticity of the information.

Optionally, the information #1 may be carried and sent in a response corresponding to the request #1, or may be carried and sent in another message. This is not limited herein. In embodiments of this application, the information #1 may also be referred to as second information. In other words, the information #1 corresponds to the second information.

In a possible implementation, the blockchain node may further record as a transaction/publish/record the voting/selection/determining result (including the result indicating whether installation of the smart contract is supported and/or the signature on the result) on the blockchain. In this implementation, the information #1 may include the voting/selection/determining result and/or an address (which may also be referred to as a storage address, a transaction address, or the like) of the voting/selection/determining result on the blockchain.

Therefore, the node #1 may determine information #2 based on the information #1 of at least one blockchain node, and send the information #2 to the blockchain node. Correspondingly, the blockchain node receives the information #2 from the node #1, and determines, based on the information #2, whether to install the smart contract. In other words, the information #2 is determined based on the information #1 of at least one blockchain node. The information #2 indicates whether to install the smart contract. For example, similar to the information #1, the information #2 may also include 1-bit indication information for indication. For details, refer to related descriptions of the information #1. Details are not described herein again. In embodiments of this application, the information #2 may also be referred to as third information. In other words, the information #2 corresponds to the third information.

For example, the node #1 receives the information #1 corresponding to each of one or more blockchain nodes on the blockchain participating in installation of the smart contract, and collects statistics on a result indicating whether installation of the smart contract is supported as indicated by the information #1 corresponding to each of the one or more blockchain nodes. If a quantity of results indicating that installation of the smart contract is supported is greater than (or greater than or equal to) a first threshold, the node #1 indicates, by using the information #2, the blockchain node to install the smart contract. Otherwise, the node #1 indicates, by using the information #2, the blockchain node not to install the smart contract.

When the information #1 includes only the address of the voting/selection/determining result on the blockchain, the node #1 may query the voting/selection/determining result of each blockchain node based on the address, and perform the foregoing statistics and threshold comparison on the voting/selection/determining result. When the information #1 includes the voting/selection/determining result and the address of the voting/selection/determining result on the blockchain, the node #1 may compare the voting/selection/determining result of each blockchain node queried based on the address with the voting/selection/determining result in the information #1. If the results are consistent, the foregoing statistics and threshold comparison may be performed. If the results are inconsistent, the foregoing statistics and threshold comparison may be directly performed by using the voting/selection/determining result queried based on the address, or the statistics and threshold comparison may be directly canceled.

Optionally, the node #1 may further sign, by using a private key, the installation result obtained through threshold comparison. In this case, the information #2 may include the result indicating whether to install the smart contract and the signature of the node #1 on the result indicating whether to install the smart contract.

In a possible implementation, the node #1 may further indicate, by feeding back a result indicating whether installation of the smart contract is supported corresponding to each blockchain node, whether the blockchain node installs the smart contract. In other words, the information #2 may include a result indicating whether installation of the smart contract is supported corresponding to at least one blockchain node, and/or an address, on the blockchain, of the result indicating whether installation of the smart contract is supported corresponding to the at least one blockchain node.

Therefore, after the blockchain node receives the information #2, if a signature is present in the information #2, the blockchain node may verify the signature in the information #2, and when the verification succeeds, determine, based on an installation result indicated in the information #2, whether to install the smart contract.

When the information #2 indicates to install the smart contract, for the design 1 in S201, the blockchain node may inform, through consensus, another blockchain node on the blockchain in which the blockchain node is located of the information #2, so that each blockchain node participating in installation may install, based on the information #2, the smart contract the node #1 requests to install. When the information #2 indicates not to install the smart contract, the blockchain node may not perform the smart contract installation operation.

Optionally, after the blockchain node completes installation of the smart contract, the blockchain node may further feed back response information to the node #1, to indicate that installation of the smart contract is completed.

Based on S201 and S202, the node #1 publishes, by using the request #1, the attribute endorsement service on the blockchain in a form of a smart contract, so that a node (for example, the node #2) that applies for an attribute can obtain a proven attribute by calling the smart contract on the blockchain. In this way, cross-domain attribute interoperability can be implemented between nodes, so as to implement credibility interoperability.

Further, the communication method provided in embodiments of this application may further include the following step.

S203: The node #1 sends information #3 to the blockchain node. Correspondingly, the blockchain node receives the information #3 from the node #1.

In embodiments of this application, the information #3 indicates usage information of the smart contract. The information #3 may serve as a profile (profile) corresponding to the smart contract, and the information #3 may include at least one of the following: an attribute endorsement service corresponding to the smart contract, an address of the smart contract, an input parameter of the smart contract, an output parameter of the smart contract, or an attribute information application template. In embodiments of this application, the information #3 may also be referred to as fourth information. In other words, the information #3 corresponds to the fourth information.

The attribute endorsement service corresponding to the smart contract indicates an attribute endorsement service provided by the installed smart contract. The address information of the smart contract indicates a location of the installed smart contract. The input parameter of the smart contract indicates parameter settings input to the smart contract when the smart contract is used to complete the attribute endorsement service. The output parameter of the smart contract indicates parameter settings output by the smart contract when the smart contract is used to complete the attribute endorsement service. The attribute information application template indicates a template for filling in attribute content that is applied for, that is, the attribute content is filled according to the template.

It should be understood that, in addition to the several parameters shown above, the information #3 may further include other usage information related to the smart contract, for example, a validity period corresponding to the smart contract, an identifier of the node #1 corresponding to the smart contract, and an identifier of the smart contract. This is not limited herein.

For example, the smart contract installed on the blockchain node is a smart contract of an attribute endorsement service provided by a device (that is, the node #1) corresponding to a social institution. In this case, the attribute endorsement service corresponding to the smart contract may be proving that the node #2 is an employee of the social institution; the address of the smart contract may be 0x1111; the input parameter of the smart contract may be at least one of the following: an ID of the node #2, an ID + an employee number of the node #2, an ID + an identity card number of the node #2, an ID + employment certification of the node #2, or the like; and an output result of the smart contract may be: The node #2 is an employee of the social institution (the output result is signed by the device corresponding to the social institution).

For another example, the smart contract installed on the blockchain node is a smart contract of an attribute endorsement service provided by a device (that is, the node #1) corresponding to an operator. In this case, the attribute endorsement service corresponding to the smart contract may be proving a current location of the node #2; the address of the smart contract may be 0x1280; the input parameter of the smart contract may be at least one of the following: an ID of the node #2 or access information of the node #2 related to the device corresponding to the operator, where the access information of the node #2 related to the device corresponding to the operator may be an ID of an access network device accessed by the node #2, a public land mobile network (public land mobile network, PLMN) ID, or the like; and an output result of the smart contract may be: The current location of the node #2 is Beijing/Shanghai, or the like (the output result is signed by the device corresponding to the operator).

After receiving the information #3, the blockchain node may perform consensus recording of the information #3 on the blockchain, and store an address of the information #3 on the blockchain. Therefore, the blockchain node may call a smart contract based on an attribute application of a node, to provide an endorsed or proven attribute for the node. It should be understood that the information #3 may be carried and sent in the request #1. In this case, S203 is an optional step.

Further, an embodiment of this application further provides a communication method, to issue a proven attribute to a node. The communication method is described by using communication between a blockchain node shown in FIG. 1 and a node (referred to as a node #2 hereinafter) requesting to obtain an attribute as an example. Certainly, an entity for performing an action of the blockchain node in the method may alternatively be an apparatus/module in the blockchain node, for example, a chip, a processor, or a processing unit in the blockchain node. This is not limited herein. An entity for performing an action of the node #2 in the method may alternatively be an apparatus/module in the node #2, for example, a chip, a processor, or a processing unit in the node #2. This is not limited herein.

As shown in FIG. 3, the communication method includes the following steps.

S301: A node #2 sends a request #2 to a blockchain node. Correspondingly, the blockchain node receives the request #2 from the node #2.

The request #2 is an attribute application initiated by the node #2. For example, the request #2 is used to request to obtain an attribute. The request #2 may include an identifier of the node #2, information indicating a type of the attribute requested to be obtained, information indicating an identity of the node #2, and other information used to request to obtain the attribute. In embodiments of this application, the request #2 may also be referred to as a first request, and the node #2 may also be referred to as a second node. In other words, the request #3 corresponds to the first request, and the node #2 corresponds to the second node.

For specific descriptions of the identifier of the node #2, refer to the related descriptions of the identifier of the node #1 in S201. Details are not described herein again. The information indicating the type of the attribute requested to be obtained indicates one or more attribute types the node #2 requests to obtain.

The information indicating the identity of the node #2 is used to prove whether the identity of the node #2 is valid and authentic, and the information indicating the identity of the node #2 may include identity proof information corresponding to the node #2 and/or a signature of a node #3 on the identity proof information corresponding to the node #2, where the node #3 is a node corresponding to an institution or organization capable of proving the identity of the node #2, for example, a device corresponding to a social authority, which has credibility in authenticating identity information of the node #2. For example, the node #2 is a terminal device, the identity information corresponding to the node #2 may be an identity card number, educational background information, or the like, and the signature of the node #3 on the identity information corresponding to the node #2 represents authentication performed by a third party on the identity that proves the node #2. In embodiments of this application, the node #3 may also be referred to as a third node. In other words, the node #3 corresponds to the third node.

Therefore, the node #2 obtains a related attribute by using the request #2.

In a possible implementation, the blockchain node may alternatively send corresponding attribute information to the node 2# proactively, and the node #2 does not need to request the attribute information from the blockchain node. In this case, S301 may be considered as an optional step.

S302: The blockchain node sends the attribute information to the node #2. Correspondingly, the node #2 receives the attribute information from the blockchain node.

The attribute information indicates an attribute corresponding to the proven node #2, and the attribute information may include the attribute corresponding to the node #2 and a signature of a node #1 related to the attribute corresponding to the node #2. The node #1 may sign, by using a private key of the node #1, the attribute corresponding to the node #2. The node #1 related to the attribute corresponding to the node #2 is a node that provides an attribute endorsement service for the node #2, and may be one or more nodes, for example, a device corresponding to a social authority or a device corresponding to a trusted third-party institution.

For example, the attribute information corresponding to the node #2 may be represented as a correspondence between the identifier of the node #2 and the attribute and the signature, for example, scID2~{attribute, signature} or {scID2, attribute, signature}, where scID2 represents the identifier of the node #2, attribute represents the attribute corresponding to the node #2, and signature represents the signature of the node #1 on the attribute corresponding to the node #2.

Optionally, the attribute information corresponding to the node #2 may further include at least one of the following: an issue time of the attribute, a validity period of the attribute, the identifier of the node #2, a signature of the blockchain node on the attribute corresponding to the node #2, or the like. The blockchain node may also sign, by using a private key of the blockchain node, the attribute corresponding to the node #2.

It should be understood that, in embodiments of this application, the node #1 may provide one or more proven attributes for the node #2, and different attributes may alternatively correspond to different nodes #1. Therefore, different attributes may correspond to different signatures, and different attributes may alternatively correspond to a same signature. This is not limited herein.

In a possible design 1, the blockchain node or the blockchain in which the blockchain node is located may prestore the attribute information corresponding to the node #2 obtained from the node #1 that provides different attribute endorsement services, and the attribute information is verified via signature. For example, the blockchain node may obtain, through query based on the identifier of the node #2 in the request #2, the attribute type requested by the node #2, and the like, the attribute signed by the node #2, to obtain the attribute information corresponding to the node #2.

In a possible design 2, smart contracts corresponding to attribute endorsement services provided by different nodes #1 are deployed on the blockchain node, and the blockchain node may call, based on the request #2, a corresponding smart contract to generate the attribute information. For example, the blockchain node may select, based on the attribute type requested by the node #2 in the request #2, a smart contract corresponding to a corresponding attribute endorsement service, and input a related parameter, for example, the identifier of the node #2 and/or the identity information corresponding to the node #2, to the selected smart contract, to obtain the attribute information corresponding to the node #2 by using the smart contract. For a specific implementation process of how the blockchain node deploys and uses the smart contract corresponding to the attribute endorsement service, refer to related descriptions in the interaction procedure of smart contract installation shown in FIG. 2. Details are not described herein again.

In a possible design 3, the blockchain node or another blockchain node on the blockchain in which the blockchain node is located is a node that provides an attribute endorsement/proof service, and the blockchain node may locally generate the attribute information or obtain the attribute information from the blockchain.

Therefore, the node #2 may obtain, by using the attribute information, an attribute having credibility. Optionally, the attribute information corresponding to the node #2 may be carried and sent in a response corresponding to the request #2, or may be carried and sent in another message. This is not limited.

Optionally, after generating the attribute information corresponding to the node #2, the blockchain node may record the attribute information on the blockchain, and store an address of the attribute information corresponding to the node #2 on the blockchain.

Further, the blockchain node may further send, to the node #2, the address of the attribute information corresponding to the node #2 on the blockchain, so that the node #2 subsequently proves authenticity of the attribute of the node #2 in a process of interacting with another node based on the attribute. In a possible implementation, the blockchain node may send information #4 to the node #2, and correspondingly, the node #2 receives the information #4 from the blockchain node. The information #4 indicates the address of the attribute information corresponding to the node #2 on the blockchain.

Optionally, the information #4 and the attribute information may be carried and sent in a same message, or may be separately sent in different messages. This is not limited herein. In embodiments of this application, the information #4 may also be referred to as first information. In other words, the information #4 corresponds to the first information.

According to the communication method shown in FIG. 3, the node #2 may obtain, from the blockchain, an endorsed attribute from the node #1 that provides different attribute endorsement services, to obtain an attribute characteristic having credibility.

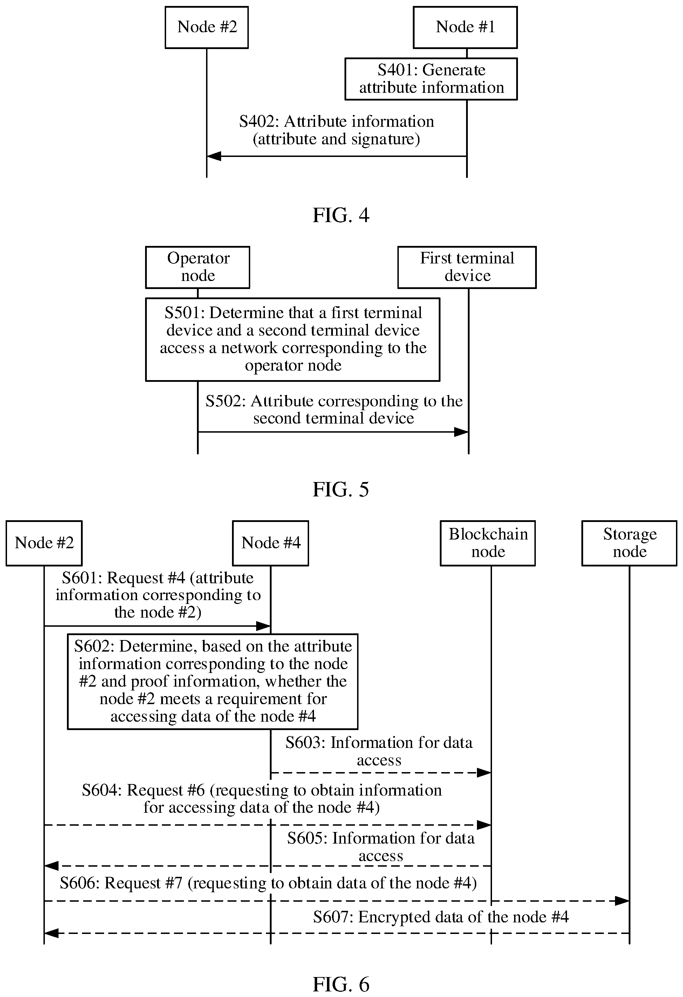

In addition to the communication method shown in FIG. 3, an embodiment of this application further provides a communication method. In the communication method, a node (namely, the node #1) that provides different attribute endorsement services may directly proactively issue an attribute to a node (namely, the node #2) that requests to obtain an attribute, without requiring a trigger from the node #2 for obtaining. As shown in FIG. 4, the communication method includes the following steps.

S401: A node #1 generates attribute information.

The attribute information indicates an attribute corresponding to an endorsed/proven node #2. The attribute information may include the attribute corresponding to the node #2 and a signature of the node #1 on the attribute corresponding to the node #2, where the node #1 signs, by using a private key, the attribute corresponding to the node #2. For example, the attribute information may be represented as {scID2, attribute, signature}. Optionally, the attribute information may further include an identifier of the node #2.

In embodiments of this application, the node #1 may provide an attribute endorsement/proof service for the node #2 served by the node #1. To be specific, the node #1 indicates the attribute of the node #2 signed and endorsed by the node #1 to the node #2 in a form of attribute information. It should be understood that the node #1 may provide corresponding attribute proof for different nodes #2, to deliver an attribute proven by the node #1 to a corresponding node #2 in a form of attribute information.

In addition to proactively delivering the attribute information of the node #2 to the node #2, in a possible implementation, the node #1 may further deliver the attribute information to the node #2 based on a trigger of the node #2. For example, the node #2 sends a request #2 to the node #1, and correspondingly, the node #1 receives the request #2 from the node #2. The request #2 is used to request to obtain an attribute. For specific descriptions of the request #2, refer to related descriptions of the request #2 in S301. Details are not described herein again.

S402: The node #1 sends the attribute information to the node #2. Correspondingly, the node #2 receives the attribute information from the node #1.

After obtaining the attribute information, the node #1 sends the attribute information to the node #2. Correspondingly, after receiving the attribute information, the node #2 may verify the signature in the attribute information by using a public key, and obtain the attribute corresponding to the node #2 when the signature verification succeeds. For example, the attribute corresponding to the node #2 in the attribute information includes that the node #2 is a formal employee of an institution corresponding to the node #1, years of service of the node #2 in the institution corresponding to the node #2 is three years, and the like.

In a possible design, the node #1 may further send the attribute information to a blockchain node, and correspondingly, the blockchain node receives the attribute information from the node #1. Therefore, after receiving the attribute information, the blockchain node may also verify the signature in the attribute information by using the public key. When the signature verification succeeds, authenticity of the attribute is determined, so that the attribute information may be recorded on the blockchain.

Optionally, the attribute information corresponding to the node #2 may be carried and sent in a response corresponding to the request #2, or may be carried and sent in another message. This is not limited.

Optionally, the blockchain node may further feed back an address of the attribute information on the blockchain to the node #1. In a possible implementation, the blockchain node sends information #4 to the node #1, and correspondingly, the node #1 receives the information #4 from the blockchain node. The information #4 indicates the address of the attribute information on the blockchain. Therefore, the node #1 may learn of a storage address or a record address of the attribute information on the blockchain based on the information #4.

Further, after obtaining the information #4, the node #1 may further send the information #4 to the node #2, to inform the node #2 of a location of the attribute information corresponding to the node #2 on the blockchain, so that the node #2 subsequently proves authenticity of the attribute of the node #2 in a process of interacting with another node based on the attribute. Optionally, the information #4 and the attribute information may be carried and sent in a same message, or may be separately sent in different messages. This is not limited herein. In embodiments of this application, the information #4 may also be referred to as first information. In other words, the information #4 corresponds to the first information.

Therefore, according to the communication method shown in FIG. 4, the node #1 may directly provide attribute proof for the node #2, so that the node #2 obtains an attribute having credibility.

It should be noted that FIG. 3 and FIG. 4 respectively show processes of two scenarios in which the node #2 obtains corresponding attribute information. It can be learned from the foregoing descriptions that both the blockchain node and the node #1 may deliver corresponding attribute information to the node #2 based on a request of the node #2, or may proactively deliver corresponding attribute information to the node #2. Therefore, in embodiments of this application, the blockchain node shown in FIG. 3 and the node #1 shown in FIG. 4 may be referred to as first nodes.

In addition, an embodiment of this application further provides a communication method, which is applicable to a scenario in which the node #2 is a terminal device. An operator stores a proven attribute of the terminal device in a UICC through over-the-air card writing. For example, a proven attribute of a calling user is displayed on an incoming call interface of the user. The communication method is described by using communication between a node that provides an operator service (referred to as an operator node hereinafter) shown in FIG. 1 and a terminal device (node #2) as an example. As shown in FIG. 5, the communication method includes the following steps.

S501: An operator node determines that a first terminal device and a second terminal device access a network corresponding to the operator node.

For a specific implementation process in which the terminal device accesses the operator network in S501, refer to related descriptions of a procedure in which a terminal device accesses a network in an existing implementation. Details are not described herein again.

S502: The operator node sends an attribute corresponding to the second terminal device to the first terminal device when determining that the first terminal device receives a call request of the second terminal device. Correspondingly, when the first terminal device receives the call request of the second terminal device, the first terminal device receives the attribute corresponding to the second terminal device from the operator node.

In other words, when the first terminal device receives the call request, the operator node may inform the first terminal device of the attribute of the second terminal device that is to call the first terminal device, so that the first terminal device can identify an identity of the second terminal device based on the attribute. For example, the operator node displays, on an incoming call interface of the first terminal device, the attribute of the second terminal device making the call. For example, the identity of the second terminal device is "courier", and the second terminal device is currently located in "Beijing".

In a possible scenario 1, the operator node may be the node #1 above, and may locally provide an attribute endorsement service for the second terminal device, to generate the attribute corresponding to the second terminal device.

In a possible scenario 2, the operator node may obtain attribute information corresponding to the second terminal device from a blockchain, to obtain an endorsed/proven attribute of the second terminal device. The attribute information corresponding to the second terminal device may include an identifier of the second terminal device, the attribute corresponding to the second terminal device, a signature of the node #1 on the attribute corresponding to the second terminal device, and the like. For specific descriptions of the attribute information, refer to related descriptions of the attribute information in S302. Details are not described herein again.

In this scenario 2, in a possible implementation, the operator node may send a request #3 to the blockchain node, and correspondingly, the blockchain node receives the request #3 from the operator node. The request #3 is used to request to obtain the attribute corresponding to the second terminal device. Therefore, the blockchain node sends the attribute information corresponding to the second terminal device to the operator node based on the request #3, and correspondingly, the operator node receives the attribute information corresponding to the second terminal device from the blockchain node. For specific descriptions of the request #3, refer to related descriptions of the request #2 in S301 or the request #2 in S401. Details are not described herein again. For a specific implementation process in which the blockchain node obtains the attribute information corresponding to the second terminal device, refer to related descriptions in the design 1 to the design 3 in S302. Details are not described herein again. In embodiments of this application, the request #3 may also be referred to as a sixth request. In other words, the request #3 corresponds to the sixth request.

According to the communication method shown in FIG. 5, the operator node may introduce a proven attribute of a user during a call between users, to implement credibility interoperability and enhance security of telecommunication network services.

The foregoing FIG. 2 to FIG. 5 describe in detail a process of how the node #2 obtains an attribute having credibility. Further, data access control on the node #2 may be further implemented based on the attribute having credibility, ensuring traceability of access records. For example, FIG. 6 is a schematic flowchart of a communication method according to an embodiment of this application. The communication method is applicable to communication between a node (namely, the foregoing node #2) that requests to obtain an attribute, a node (referred to as a node #4 hereinafter) that provides a data service, a blockchain node, and a node that provides a storage service (referred to as a storage node hereinafter) that are shown in FIG. 1.

As shown in FIG. 6, the communication method includes the following steps.

S601: A node #2 sends a request #4 to a node #4. Correspondingly, the node #4 receives the request #4 from the node #2.

The request #4 is a request initiated by the node #2 for accessing data. For example, the request #4 is used to request to access data of the node #4. The request #4 includes attribute information corresponding to the node #2, and the attribute information corresponding to the node #2 includes an attribute corresponding to the node #2 and a signature of a node #1 on the attribute corresponding to the node #2. For a process in which the node #2 obtains the attribute information corresponding to the node #2, refer to any implementation in FIG. 2 to FIG. 5. Details are not described herein again. For specific descriptions of the attribute information corresponding to the node #2, refer to the foregoing related descriptions. Details are not described herein again. Optionally, the attribute information corresponding to the node #2 may further include an identifier of the node #2, with which triplet information of identifier, attribute, and signature may be formed.

In other words, when the node #2 needs to access data of the node #4, the node #2 may generate and send the request #4 to the node #4, to apply for accessing data of the node #4. It should be understood that the request #4 may further include related information about accessed data such as a data type and a data volume the node #2 requests to access, to indicate data content the node #2 specifically expects to obtain. In embodiments of this application, the request #4 may also be referred to as a second request, and the node #4 may also be referred to as a fifth node. In other words, the request #4 corresponds to the second request, and the node #4 corresponds to the fifth node.

In a possible design, the node #2 can exchange data with the node #4 only after establishing secure authentication with the node #4. In other words, before sending the request #4, the node #2 needs to complete secure authentication with the node #4, to establish a secure connection for interaction.

In this design, the node #4 may perform secure authentication with the node #2 by verifying the identifier of the node #2. In a possible implementation, the node #2 sends identification information to the node #4, and correspondingly, the node #2 receives the identification information from the node #4. The identification information may include the identifier of the node #2, an identifier of a node #1 related to the identifier of the node #2, a signature of the node #1 related to the identifier of the node #2, and the like. The identifier of the node #1 related to the identifier of the node #2 identifies the node #1 that allocates the identifier to the node #2, and the signature of the node #1 related to the identifier of the node #2 is a signature of the node #1 that allocates the identifier to the node #2 on the identifier allocated to the node #2, to prove authenticity and validity of the identifier of the node #2.

After obtaining the identification information of the node #2, the node #4 may verify the identifier of the node #2 by using credential information of the node #1 related to the identifier of the node #2. When the identifier of the node #2 is verified, the node #4 determines to establish secure authentication with the node #2. In this case, secure authentication between the node #2 and the node #4 is considered to be completed, so that the node #4 may establish a secure connection to the node #2.

For example, the credential information of the node #1 related to the identifier of the node #2 may be a certificate of the node #1 related to the identifier of the node #2. The certificate of the node #1 may include a public key, a digital signature of the public key, information indicating an issuer of the public key, information indicating an owner of the public key (for example, the identifier of the node #1 related to the identifier of the node #2), and the like. Therefore, the node #4 may verify, by using the public key in the credential information, the signature, in the identification information, of the node #1 related to the identifier of the node #2. When the verification succeeds, it is considered that the identifier of the node #2 is valid and authentic. In other words, when the verification succeeds, it is considered that the node #2 is a true owner of the identifier, so that the node #4 may establish a secure connection to the node #2.

It should be understood that when the identifier of the node #2 fails to be verified, a secure connection cannot be established between the node #2 and the node #4.

The credential information of the node #1 related to the identifier of the node #2 may be obtained by the node #4 from a blockchain based on the identifier of the node #2 and/or the identifier of the node #1 related to the identifier of the node #2. It may be understood that the node #1 related to the identifier of the node #2 publishes the credential information of the node #1 on the blockchain, so that the node #4 can obtain the corresponding credential information from the blockchain. Alternatively, the node #4 may directly obtain the credential information corresponding to the node #1 from the corresponding node #1 based on the identifier of the node #1 related to the identifier of the node #2. This is not limited herein.

Therefore, the node #2 can send the request #4 to the node #4 only when the secure authentication is completed. Correspondingly, the node #4 may receive the request #4 from the node #2.

Optionally, in a scenario in which the attribute information corresponding to the node #2 is published on the blockchain, the request #4 may further include an address, on the blockchain, of the attribute information corresponding to the node #2, so that the node #4 may query, based on the address, whether the attribute information corresponding to the node #2 stored on the blockchain is consistent with the attribute information corresponding to the node #2 carried in the request #4, to verify the attribute information.

S602: The node #4 determines, based on the attribute information corresponding to the node #2 and proof information, whether the node #2 meets a requirement for accessing data of the node #4.

The proof information is used to verify the attribute corresponding to the node #2, that is, the proof information is used to verify whether the attribute corresponding to the node #2 carried in the request #4 is an authentic and valid attribute of the node #2, or whether the node #2 is a true owner of the attribute. For example, the proof information includes the credential information of the node #1 related to the attribute corresponding to the node #2. The node #1 related to the attribute corresponding to the node #2 refers to a node that provides an attribute endorsement service for the node #2, and may be one or more nodes, for example, a device corresponding to a social authority or a device corresponding to a trusted third-party institution. The credential information may be a certificate of the node #1 related to the attribute corresponding to the node #2, including a public key, a digital signature of the public key, information indicating an issuer of the public key, information indicating an owner of the public key, and the like.

Optionally, the proof information may further include a hash of the attribute corresponding to the node #2, or the attribute corresponding to the node #2, to verify whether the attribute corresponding to the node #2 carried in the request #4 is consistent with that in the proof information.

It should be understood that the node #2 may correspond to one or more attributes, and nodes #1 related to different attributes may be different. Therefore, a corresponding signature and credential information may also vary.

In other words, S602 in which the node #4 determines whether the node #2 meets the requirement for accessing data of the node #4 includes at least the following two verification processes.

Verification process 1: After obtaining the request #4, the node #4 may first verify, by using the proof information, the attribute corresponding to the node #2 in the request #4, to determine whether the attribute corresponding to the node #2 in the request #4 is authentic and valid, that is, determine whether the node #2 is a true owner of the attribute.

For example, the node #4 verifies, based on the public key in the proof information, the signature in the attribute information corresponding to the node #2 in the request #4. When the signature verification succeeds, the attribute corresponding to the node #2 in the request #4 is regarded as authentic and valid, and the following verification process 2 continues to be performed. Otherwise, the attribute corresponding to the node #2 in the request #4 is considered to be untrusted, and the node #4 may reject the request #4, denying the node #2 access to data of the node #4, or declining to authorize the node #2 to access data of the node #4.

For the proof information, in a possible design, the node #4 may obtain the proof information from the blockchain, that is, the proof information is deployed on the blockchain. The node #4 may obtain the corresponding proof information from the blockchain based on the identifier of the node #2 and/or the identifier of the node #1 related to the attribute corresponding to the node #2. For example, the node #4 sends a request #5 to the blockchain node, and correspondingly, the blockchain node receives the request #5 from the node #4. The request #5 is used to request to obtain the proof information corresponding to the node #2, and the request #5 may include the identifier of the node #1 related to the attribute corresponding to the node #2, the identifier of the node #2, and the like. Therefore, the blockchain node may obtain, based on the request #5, the proof information locally or from the blockchain in which the blockchain node is located, and send the proof information to the node #4. Optionally, the proof information corresponding to the node #2 may be carried and sent in a response corresponding to the request #5, or may be carried and sent in another message. This is not limited. In embodiments of this application, the request #5 may also be referred to as a third request. In other words, the request #5 corresponds to the third request.

In addition to the foregoing possible design, the node #4 may alternatively obtain the proof information from the node #1 related to the attribute corresponding to the node #2. This is not limited herein.

When the verification process 1 is completed and the verification succeeds, the following verification process 2 is performed: The node #4 determines, based on the attribute corresponding to the verified node #2, whether the node #2 meets the requirement for accessing data of the node #4. The requirement for accessing data of the node #4 is set based on the attribute requirement corresponding to the node #2, and may be referred to as an access policy, an access condition, or the like. This is not limited herein.

For example, the requirement for accessing data of the node #4 is: (an employee of a company A, an employee of a company B, or an employee of a company C) and currently located in China, and the attribute corresponding to the node #2 in the request #4 includes that the node #2 is an employee of the company B and that the node #2 is currently located in China. Therefore, the node #4 may determine, based on the attribute corresponding to the node #2 in the request #4, that the node #2 meets the requirement for accessing data of the node #4, so as to accept the data access request of the node #2, or authorize the node #2 to access data.

On the contrary, if the node #2 does not meet the requirement for accessing data of the node #4, for example, the attribute corresponding to the node #2 in the request #4 includes that the node #2 is an employee of the company B and the node #2 is currently located abroad, the node #4 does not accept the data access request of the node #2, or bars the node #2 from accessing data.

For the node #2 that meets the requirement for accessing data of the node #4, the node #4 may send a response corresponding to the request #4 to the node #2, to indicate that the node #2 can access data of the node #4. In a possible design 1, the response corresponding to the request #4 may carry data that the node #2 expects to access. Therefore, the node #2 may obtain the accessed data based on the response corresponding to the request #4.

In a possible design 2, to reduce complexity of data access, the node #4 may encrypt data of the node #4 and then store the encrypted data on the storage node, and publish, on the blockchain, information for accessing data, so that the node #2 that accesses data can obtain the information for accessing data from the blockchain, to complete data access.

In this design 2, to enable the node #2 to decrypt the obtained encrypted data of the node #4, when determining that the node #2 meets the requirement for accessing data of the node #4, the node #4 may further generate and send a first key for the node #2, that is, the node #4 may send the first key to the node #2, where the first key is used to decrypt the encrypted data of the node #4, and the first key may be determined based on the attribute corresponding to the node #2. Optionally, the first key may be carried and sent in the response corresponding to the request #4, or may be carried and sent in another message. This is not limited herein.

In addition, the node #4 may further record an access status of the node #2 on the blockchain. In a possible implementation, the node #4 sends, to the blockchain node, information indicating an access record of the node #2, and correspondingly, the blockchain node receives, from the node #4, the information indicating the access record of the node #2. The information indicating the access record of the node #2 may indicate when and where the node #2 accesses specific data of the node #4. Therefore, the blockchain node records the access status of the node #2.

In addition, in the foregoing design 2, the communication method provided in this embodiment of this application may further include the following steps.

S603: The node #4 sends information for data access to the blockchain node. Correspondingly, the blockchain node receives the information for data access from the node #4.

The information for data access indicates how to access stored data of the node #4. The information for data access may be configured as a profile (profile) of the node #4. The information for data access includes information indicating a requirement that needs to be met by the node #2 for accessing data of the node #4 and information indicating to obtain data of the node #4.

The information indicating the requirement that needs to be met by the node #2 for accessing data of the node #4 may be referred to as an access policy or an access condition, is a requirement of the node #4 for the node #2 that requests to access data, and may be set based on an attribute requirement corresponding to the node #2.

The information indicating to obtain data of the node #4 may include a storage address of the encrypted data of the node #4, and/or information indicating the encrypted data of the node #4. The storage address of the encrypted data of the node #4 indicates a location of a storage node that stores the encrypted data of the node #4, and the information indicating the encrypted data of the node #4 may be indicated by using an index or a data feature description, so as to query data of a corresponding type or feature.

In embodiments of this application, the data of the node #4 may be encrypted by using a symmetric key or an asymmetric key. This is not limited herein. For example, the node #4 encrypts the data of the node #4 by using a second key.

Optionally, the information indicating to obtain the data of the node #4 may further include the encrypted second key (that is, a ciphertext of the second key). For example, the second key is K, an encryption manner of the second key may be ciphertext-policy attribute-based encryption (ciphertext-policy attribute-based encryption, CPABE), and the second key encrypted by using CPABE, that is, the ciphertext, is K1.

Therefore, after obtaining the information for data access corresponding to the node #4, the blockchain node may publish the information or record the information as a transaction on the blockchain. Optionally, the blockchain node may send, to the node #4, an address of the information for data access corresponding to the node #4 on the blockchain.

Further, the node #2 may obtain the information for data access from the blockchain. When the node #2 meets the requirement for accessing data of the node #4, that is, the node #2 is authorized to access data of the node #4, the node #2 may obtain the encrypted data of the node #4 from the storage node based on the information, in the information for data access, indicating to obtain data of the node #4, as described in S604.

It should be understood that S603 and S601 to S602 are not subject to a specific sequence in this embodiment of this application. S603 may be performed before or after S601 to S602.

S604: The node #2 sends a request #6 to the blockchain node. Correspondingly, the blockchain node receives the request #6 from the node #2.

The request #6 is used to request to obtain information for accessing data of the node #4, and the request #6 includes an identifier of the node #4. Therefore, after receiving the request #6, the blockchain node may obtain, through query based on the identifier of the node #4, the information for data access corresponding to the node #4, and send the information to the node #2. In embodiments of this application, the request #6 may also be referred to as a fourth request. In other words, the request #6 corresponds to the fourth request.

S605: The blockchain node sends the information for data access to the node #2. Correspondingly, the node #2 receives the information for data access from the blockchain node.

In a possible implementation, the information for data access may be carried and sent in a response corresponding to the request #6, or may be carried and sent in another message. This is not limited herein.

Therefore, after receiving the information for data access from the blockchain node, the node #2 may obtain the encrypted data of the node #4 based on the information for data access.

It should be understood that S604 to S605 and S601 to S602 are not subject to a specific sequence in this embodiment of this application. S604 to S605 may be performed before or after S601 to S602.

Optionally, the node #2 may further apply for an attribute meeting the requirement based on the information indicating the requirement that needs to be met by the node #2 for accessing data of the node #4, to perform S601, so as to obtain permission for accessing data of the node #4. In this case, S604 may be performed before S601.

S606: The node #2 sends a request #7 to the storage node. Correspondingly, the storage node receives the request #7 from the node #2.

After obtaining the information for data access, the node #2 may determine the location of the storage node based on the storage address in the information indicating to obtain data of the node #4, and send the request #7 to the corresponding storage node. The request #7 is used to request to obtain data of the node #4, and the request #7 includes the identifier of the node #4, and an index or a feature description corresponding to data of the node #4 the node #2 expects to obtain. In embodiments of this application, the request #7 may also be referred to as a seventh request. In other words, the request #7 corresponds to the seventh request.

S607: The storage node sends the encrypted data of the node #4 to the node #2. Correspondingly, the node #2 receives the encrypted data of the node #4 from the storage node.

In a possible implementation, the encrypted data of the node #4 may be carried and sent in a response corresponding to the request #7, or may be carried and sent in another message. This is not limited.

After obtaining the encrypted data of the node #4, the node #2 may decrypt the encrypted data of the node #4 based on the obtained first key, to obtain the data of the node #4.

In a possible design, the encrypted data of the node #4 is data of the node #4 encrypted by using the second key, and the first key may be used to decrypt the encrypted second key. In other words, the node #2 may obtain the second key through decryption based on the first key, and then obtain the data of the node #4 through decryption by using the second key, or the node #2 may directly obtain the data of the node #4 through decryption based on the first key.

According to the communication method shown in FIG. 6, the node #4 performs data access control on the node #2 based on the attribute information corresponding to the node #2, improving data access reliability and security.

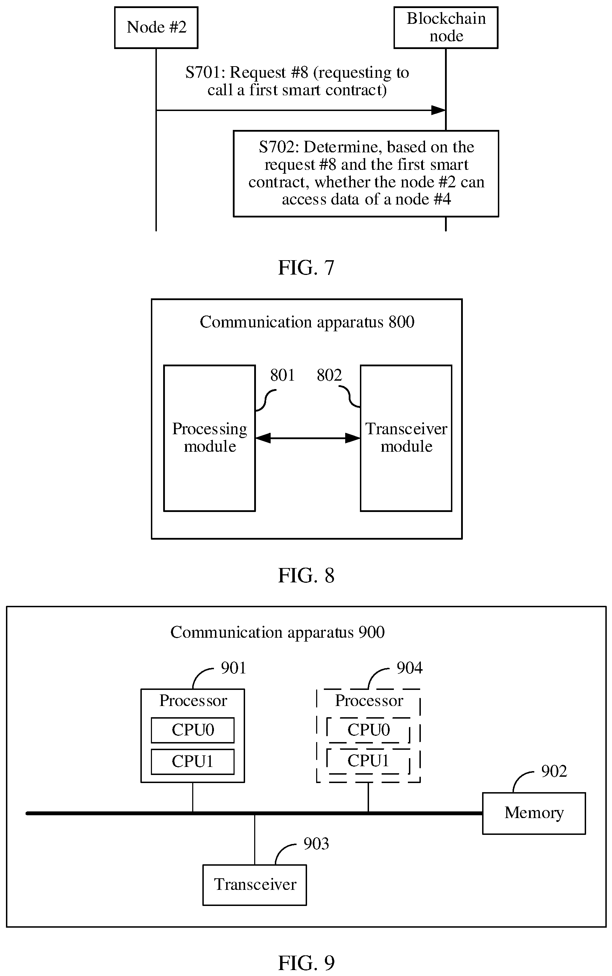

In addition to performing data access control on the node #2 by the node #4 as shown in FIG. 6, the blockchain node may also perform data access control on the node #2 by calling a smart contract. For example, FIG. 7 is a schematic flowchart of another communication method according to an embodiment of this application. As shown in FIG. 7, the communication method includes the following steps.

S701: A node #2 sends a request #8 to a blockchain node. Correspondingly, the blockchain node receives the request #8 from the node #2.

The request #8 is used to request to call a first smart contract, and the first smart contract is used to determine whether the node #2 can access data of a node #4. In other words, the request #8 is used to request the blockchain node to call the first smart contract to determine whether the node #2 can access data of the node #4. The request #8 may include information such as an identifier of the node #2, an identifier of the node #4, an identifier of the first smart contract, and parameter information used as an input of the first smart contract. In embodiments of this application, the request #8 may also be referred to as an eighth request. In other words, the request #8 corresponds to the eighth request.

In this embodiment of this application, the first smart contract may be set based on an attribute requirement for the node #2. Therefore, the parameter information used as the input of the first smart contract may be attribute information corresponding to the node #2. The attribute information corresponding to the node #2 may include an attribute corresponding to the node #2 and a signature of a node #1 related to the attribute corresponding to the node #2. For specific descriptions, refer to related descriptions of the attribute corresponding to the node #2 in S601. Details are not described herein again.

In some possible designs, the identifier of the node #2 and/or the identifier of the node #4 may also be used as input parameters of the first smart contract.

The first smart contract may be understood as serving to provide a data access authorization service for the node #2. The node #2 indicates, by using the request #8, the blockchain node to call the first smart contract, to determine whether the node #2 can access data of the node #4. In a possible implementation, the first smart contract may be installed on a blockchain at a request of the node #4. For an installation process of the first smart contract, refer to the smart contract installation procedure shown in FIG. 1. Details are not described herein again. Therefore, the blockchain node may obtain usage information corresponding to the first smart contract, for example, a service type corresponding to the first smart contract, input parameter settings of the first smart contract, and output parameter settings of the first smart contract. For details, refer to related descriptions of the information #3. Details are not described herein again.

S702: The blockchain node determines, based on the request #8 and the first smart contract, whether the node #2 can access data of the node #4.

After obtaining the request #8, the blockchain node may call the first smart contract based on the request #8, input the request #8 as an input parameter of the first smart contract into the first smart contract, and determine, based on an output of the first smart contract, whether the node #2 can access data of the node #4. The first smart contract may be considered as a set access policy.

In a possible design, the input of the first smart contract includes the attribute information corresponding to the node #2, and the output of the first smart contract indicates whether the node #2 can access data of the node #4. The output of the first smart contract may include a first output. The first output may be represented by 0 or 1. The first output being 0 indicates that the node #2 cannot access data of the node #4, and the first output being 1 indicates that the node #2 can access data of the node #4.

After the blockchain node completes determining, the blockchain node may send a response corresponding to the request #8 to the node #2. The response corresponding to the request #8 indicates whether the node #2 can access data of the node #4. For example, the response corresponding to the request #8 carries indication information 1. The indication information 1 may indicate, by using one bit, whether the node #2 can access data of the node #4. For example, a bit value 1 indicates that the node #2 can access data of the node #4, and a bit value 0 indicates that the node #2 cannot access data of the node #4. Therefore, after receiving the response corresponding to the request #8, the node #2 may determine whether the node #2 can access data of the node #4.

In a scenario in which the data of the node #4 is encrypted and stored by the node #4 in a storage node outside the blockchain, the output of the first smart contract may further include a second output, and the second output indicates a first key used to decrypt the encrypted data of the node #4. When the node #2 can access data of the node #4, the second output may be a first key that is not null. When the node #2 cannot access data of the node #4, the second output may be a first key whose value is null.

In this scenario, when the node #2 can access data of the node #4, the blockchain node further needs to send the first key to the node #2. The first key may be carried and sent in the response corresponding to the request #8, or may be sent in another message.

In this scenario, in a possible design, the first key may directly decrypt the encrypted data of the node #4, to obtain the data of the node #4. In another possible design, the first key is used to decrypt an encrypted second key, and the second key is used to encrypt the data of the node #4. In other words, the data of the node #4 is encrypted by the node #4 by using the second key and then stored in the storage node. In this case, decryption is performed by using the first key to obtain the second key, and then the data of the node #4 is obtained by decrypting the encrypted data of the node #4 by using the second key.

Therefore, the node #2 may obtain the encrypted data of the node #4 from the storage node, and decrypt the data of the node #4 based on the first key. For a specific implementation process in which the node #2 obtains the encrypted data from the storage node, refer to related descriptions in S603 to S607. Details are not described herein again.

In addition, the blockchain node may further generate and record an access status of the node #2, for example, record the access status on the blockchain, to record when and where the node #2 accessed data of the node #4 and what data was accessed.

According to the communication method shown in FIG. 7, the blockchain node may call the first smart contract based on the attribute information corresponding to the node #2 to perform data access control on the node #2, improving data access reliability and security.

In the foregoing embodiments, methods and/or steps implemented by the blockchain node may alternatively be implemented by a component (for example, a processor, a chip, a chip system, a circuit, a logic module, or software) that can be used in the blockchain node; methods and/or steps implemented by the node #1 may alternatively be implemented by a component (for example, a processor, a chip, a chip system, a circuit, a logic module, or software) that can be used in the node #1; methods and/or steps implemented by the node #2 may alternatively be implemented by a component (for example, a processor, a chip, a chip system, a circuit, a logic module, a DU, or software) that can be used in the node #2; methods and/or steps implemented by the node #3 may alternatively be implemented by a component (for example, a processor, a chip, a chip system, a circuit, a logic module, or software) that can be used in the node #3; methods and/or steps implemented by the node #4 may alternatively be implemented by a component (for example, a processor, a chip, a chip system, a circuit, a logic module, or software) that can be used in the node #4; methods and/or steps implemented by the operator node may alternatively be implemented by a component (for example, a processor, a chip, a chip system, a circuit, a logic module, or software) that can be used in the operator node; and methods and/or steps implemented by the storage node may alternatively be implemented by a component (for example, a processor, a chip, a chip system, a circuit, a logic module, or software) that can be used in the storage node.

The foregoing mainly describes the solutions provided in this application. Correspondingly, this application further provides a communication apparatus. The communication apparatus is configured to implement various methods in the foregoing method embodiments. The communication apparatus may be the node #1 in the foregoing method embodiments, or an apparatus including the node #1, or a component that may be used in the node #1, for example, a chip or a chip system. Alternatively, the communication apparatus may be the node #2 in the foregoing method embodiments, or an apparatus including the node #2, or a component that may be used in the node #2, for example, a chip or a chip system. Alternatively, the communication apparatus may be the node #3 in the foregoing method embodiments, or an apparatus including the node #3, or a component that may be used in the node #3, for example, a chip or a chip system. Alternatively, the communication apparatus may be the node #4 in the foregoing method embodiments, or an apparatus including the node #4, or a component that may be used in the node #4, for example, a chip or a chip system. Alternatively, the communication apparatus may be the operator node in the foregoing method embodiments, or an apparatus including the operator node, or a component that may be used in the operator node, for example, a chip or a chip system. Alternatively, the communication apparatus may be the storage node in the foregoing method embodiments, or an apparatus including the storage node, or a component that may be used in the storage node, for example, a chip or a chip system.

In some embodiments, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used.

For example, the communication apparatus is any one of the node #1 to the node #4, or the operator node or the storage node in the foregoing method embodiments. FIG. 8 is a diagram of a structure of a communication apparatus according to an embodiment of this application. As shown in FIG. 8, the communication apparatus 800 includes a processing module 801 and a transceiver module 802. The processing module 801 is configured to perform a processing function of any one of the node #1 to the node #4, or the operator node or the storage node in the foregoing method embodiments. The transceiver module 802 is configured to perform a transceiver function of any one of the node #1 to the node #4, or the operator node or the storage node in the foregoing method embodiments.

All related content of the steps in the foregoing method embodiments may be cited in function descriptions of the corresponding functional modules. Details are not described herein again.

The communication apparatus 800 provided in this embodiment can perform the foregoing methods. Therefore, for technical effects that can be achieved by the communication apparatus 800, refer to the method embodiments. Details are not described herein again.

In a possible design scheme, in this embodiment of this application, the transceiver module 802 may include a receiving module and a sending module (not shown in FIG. 8). The sending module and the receiving module are respectively configured to implement a sending function and a receiving function of the communication apparatus 800.

In a possible design scheme, the communication apparatus 800 may further include a storage module (not shown in FIG. 8), and the storage module stores a program or instructions. When the processing module 801 executes the program or the instructions, the communication apparatus 800 is caused to perform a function of any one of the node #1 to the node #4, or the operator node or the storage node in the method shown in any one of FIG. 2 to FIG. 7.

In some embodiments, the processing module 801 in the communication apparatus 800 may be implemented by using a processor or a processor-related circuit component, and may be a processor or a processing unit. The transceiver module 802 may be implemented by using a transceiver or a transceiver-related circuit component, and may be a transceiver or a transceiver unit.

For example, FIG. 9 is a diagram of a structure of another communication apparatus according to an embodiment of this application. The communication apparatus may be any one of the node #1 to the node #4, or the operator node or the storage node in the foregoing method embodiments, or may be a chip (system) or another component that may be disposed on any one of the node #1 to the node #4, or the operator node or the storage node As shown in FIG. 9, the communication apparatus 900 may include a processor 901. In a possible design scheme, the communication apparatus 900 may further include a memory 902 and/or a transceiver 903. The processor 901 is coupled to the memory 902 and the transceiver 903, for example, may be connected to the memory 902 and the transceiver 903 through a communication bus.

The following describes the components of the communication apparatus 900 in detail with reference to FIG. 9.

The processor 901 is a control center of the communication apparatus 900, and may be one processor, or may be a collective term for multiple processing elements. For example, the processor 901 includes one or more CPUs, or may be an application specific integrated circuit (application specific integrated circuit, ASIC), or may be one or more integrated circuits configured to implement embodiments of this application, for example, one or more microprocessors (digital signal processor, DSP) or one or more field programmable gate arrays (field programmable gate array, FPGA).

In a possible design scheme, the processor 901 may perform various functions of the communication apparatus 900 by running or executing a software program stored in the memory 902 and invoking data stored in the memory 902.

During specific implementation, in an embodiment, the processor 901 may include one or more CPUs, for example, the CPU0 and the CPU1 shown in FIG. 9.

During specific implementation, in an embodiment, the communication apparatus 900 may alternatively include multiple processors, for example, the processor 901 and the processor 904 shown in FIG. 9. Each of the processors may be a single-core processor, or may be a multicore processor. The processor herein may be one or more devices, circuits, and/or processing cores configured to process data (for example, computer program instructions).

The memory 902 is configured to store the software program for performing the solutions of this application, and the processor 901 controls execution of the software program. For a specific implementation, refer to the method embodiments. Details are not described herein again.

In a possible design scheme, the memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 902 may be integrated with the processor 901, or may exist independently and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal device, and the transceiver 903 may be configured to communicate with an access network device or communicate with another terminal device. For another example, the communication apparatus 900 is a network device, and the transceiver 903 may be configured to communicate with a terminal device or communicate with another network device.

In a possible design scheme, the transceiver 903 may include a receiver and a transmitter (not separately shown in FIG. 9). The receiver is configured to implement a receiving function, and the transmitter is configured to implement a sending function.

In a possible design solution, the transceiver 903 may be integrated with the processor 901, or may exist independently and is coupled to the processor 901 through an interface circuit (not shown in FIG. 9) of the communication apparatus 900. This is not specifically limited in this embodiment of this application.

It should be noted that the structure of the communication apparatus 900 shown in FIG. 9 does not constitute a limitation on the communication apparatus. An actual communication apparatus may include more or fewer components than those shown in the figure, combine some components, or have different component arrangements.

In addition, for technical effects of the communication apparatus 900, refer to the technical effects of the methods in the method embodiments. Details are not described herein again.

An embodiment of this application further provides a computer-readable storage medium. The computer-readable storage medium stores a computer program or instructions. When the computer program or the instructions are executed by a computer, functions in the foregoing method embodiments are implemented.

An embodiment of this application further provides a computer program product. When the computer program product is executed by a computer, functions in the foregoing method embodiments are implemented.

All or some of the foregoing embodiments may be implemented by using software, hardware, firmware, or any combination thereof. When a software program is used for implementation, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the essence of the technical solutions of this application, or the part contributing to the conventional technology, or a part of the technical solutions may be implemented in a form of a software product. The computer software product is stored in a storage medium, and includes several instructions to cause a computer device (which may be a personal computer, a server, or an access network device) to perform all or some of the steps of the methods described in embodiments of this application. The foregoing storage medium includes any medium that can store program code, such as a USB flash drive, a removable hard disk, a ROM, a random access memory RAM, a magnetic disk, or an optical disc.

Although this application is described with reference to embodiments, in a process of implementing this application that claims protection, a person skilled in the art may understand and implement other variations to the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered to have covered any of or all modifications, variations, combinations or equivalents within the scope of this application. It is clearly that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A communication method, wherein the method comprises:
obtaining, by a first node, attribute information, wherein the attribute information indicates an attribute corresponding to a proven second node; and
sending, by the first node, the attribute information to the second node.

2. The method according to claim 1, wherein the method further comprises:
sending, by the first node, first information to the second node, wherein the first information indicates an address of the attribute information on a blockchain.

3. The method according to claim 1 or 2, wherein the obtaining the attribute information comprises:
receiving, by the first node, a first request from the second node, wherein the first request is used to request to obtain an attribute; and
sending, by the first node, the attribute information to the second node based on the first request.

4. The method according to claim 3, wherein the sending, by the first node, the attribute information to the second node based on the first request comprises:
generating, by the first node, the attribute information by using a smart contract based on the first request, wherein the smart contract is associated with an attribute endorsement service; and
sending, by the first node, the attribute information to the second node.

5. The method according to claim 4, wherein the method further comprises:
receiving, by the first node, a fifth request from a fourth node, wherein the first request is used to request installation of the smart contract, and the fourth node is a node configured to provide an attribute endorsement or proof service; and
installing, by the first node, the smart contract based on the fifth request.

6. The method according to claim 5, wherein the installing the smart contract based on the fifth request comprises:
sending, by the first node, second information to the fourth node based on the fifth request, wherein the second information indicates whether installation of the smart contract is supported; and
receiving, by the first node, third information from the fourth node, wherein the third information indicates to install the smart contract, and the third information is determined based on the second information corresponding to at least one blockchain node on a blockchain.

7. The method according to claim 6, wherein when a result indicating whether installation of the smart contract is supported is recorded by the first node on the blockchain, the second information comprises an address, on the blockchain, of the result indicating whether installation of the smart contract is supported.

8. The method according to claim 6 or 7, wherein the third information comprises a result indicating whether installation of the smart contract is supported corresponding to at least one blockchain node on the blockchain, and/or an address, on the blockchain, of the result indicating whether installation of the smart contract is supported corresponding to the at least one blockchain node.

9. The method according to any one of claims 5 to 8, wherein the method further comprises:
receiving fourth information from the fourth node, wherein the fourth information indicates usage information of the smart contract.

10. The method according to claim 9, wherein the fourth information comprises at least one of the following: an attribute endorsement service corresponding to the smart contract, an address of the smart contract, an input parameter of the smart contract, an output parameter of the smart contract, or an application template for the attribute information.

11. The method according to claim 1 or 2, wherein the method further comprises:
sending, by the first node, the attribute information to a blockchain node; and
receiving, by the first node, first information from the blockchain node, wherein the first information indicates an address of the attribute information on a blockchain.

12. A communication method, wherein the method comprises:
receiving, by a second node, attribute information from a first node, wherein the attribute information indicates an attribute corresponding to the proven second node; and
determining, by the second node, the attribute corresponding to the second node based on the attribute information.

13. The method according to claim 12, wherein the method further comprises:
receiving, by the second node, first information from the first node, wherein the first information indicates an address of the attribute information on a blockchain.

14. The method according to claim 12 or 13, wherein the method further comprises:
sending, by the second node, a first request to the first node, wherein the first request is used to request to obtain an attribute.

15. The method according to any one of claims 3 to 9 or 14, wherein the first request comprises at least one of the following: an identifier of the second node, information indicating a type of the attribute requested to be obtained, identity proof information corresponding to the second node, or a signature of a third node on identity proof information corresponding to the second node.

16. The method according to any one of claims 1 to 15, wherein the attribute information comprises the attribute corresponding to the second node and a signature of a fourth node related to the attribute corresponding to the second node.

17. The method according to claim 16, wherein the attribute information further comprises at least one of the following: an issuance time of the attribute information, a validity period of the attribute information, the identifier of the second node, or a signature of a blockchain node on the attribute corresponding to the second node.

18. A communication method, wherein the method comprises:
receiving, by a fifth node, a second request from a second node, wherein the second request is used to request to access data of the fifth node, and the second request comprises attribute information corresponding to the second node; and
determining, by the fifth node based on the attribute information corresponding to the second node and proof information, whether the second node meets a requirement for accessing data of the fifth node, wherein the proof information is used to verify an attribute corresponding to the second node.

19. The method according to claim 18, wherein the second request further comprises an address, on a blockchain, of the attribute information corresponding to the second node.

20. The method according to claim 18 or 19, wherein the method further comprises:
sending, by the fifth node, a third request to a blockchain node, wherein the third request is used to request to obtain the proof information; and
receiving, by the fifth node, the proof information from the blockchain node.

21. The method according to claim 20, wherein the proof information comprises credential information of a fourth node related to the attribute corresponding to the second node.

22. The method according to claim 21, wherein the proof information further comprises: a hash of the attribute corresponding to the second node, and/or the attribute corresponding to the second node.

23. The method according to any one of claims 18 to 22, wherein the receiving, by the fifth node, the second request from the second node comprises:
receiving, by the fifth node, identification information from the second node, wherein the identification information comprises an identifier of the second node and a signature of a fourth node related to the identifier of the second node;
determining to establish secure authentication with the second node when the identifier of the second node is verified; and
receiving, by the fifth node, the second request from the second node when the secure authentication is completed.

24. The method according to any one of claims 18 to 23, wherein the method further comprises:
sending, by the fifth node, information for data access to a blockchain node, wherein the information for data access comprises information indicating a requirement that needs to be met by the second node for accessing data of the fifth node and information indicating to obtain data of the fifth node.

25. The method according to any one of claims 18 to 24, wherein the method further comprises:
sending, by the fifth node, a first key to the second node when the second node meets the requirement for accessing data of the fifth node, wherein the first key is determined based on the attribute corresponding to the second node, and the first key is used to decrypt encrypted data of the fifth node.

26. The method according to claim 25, wherein the method further comprises:
sending, by the fifth node, information for data access to a blockchain node, wherein the information for data access comprises information indicating a requirement that needs to be met by the second node for accessing data of the fifth node and information indicating to obtain data of the fifth node.

27. The method according to claim 26, wherein the information indicating to obtain data of the fifth node comprises a storage address of the encrypted data of the fifth node, and/or information indicating the encrypted data of the fifth node.

28. The method according to claim 27, wherein the data of the fifth node is encrypted by using a second key, the information indicating to obtain data of the fifth node further comprises the encrypted second key, and the first key is specifically used to decrypt the encrypted second key.

29. The method according to claim 27 or 28, wherein the method further comprises:
sending, by the fifth node, the encrypted data of the fifth node to a storage node corresponding to the storage address.

30. The method according to any one of claims 18 to 29, wherein the method further comprises:
sending, by the fifth node to a blockchain node, information indicating an access record of the second node.

31. The method according to any one of claims 18 to 30, wherein the attribute information corresponding to the second node comprises the attribute corresponding to the second node and a signature of a fourth node related to the attribute corresponding to the second node.

32. A communication method, wherein the method comprises:
generating, by a second node, a second request, wherein the second request is used to request to access data of a fifth node, and the second request comprises attribute information corresponding to the second node; and
sending, by the second node, the second request to the fifth node.

33. The method according to claim 32, wherein the second request further comprises an address, on a blockchain, of the attribute information corresponding to the second node.

34. The method according to claim 32 or 33, wherein the sending, by the second node, the second request to the fifth node comprises:
establishing, by the second node, secure authentication with the fifth node based on an identifier of the second node; and
sending, by the second node, the second request to the fifth node when the secure authentication is completed.

35. The method according to any one of claims 32 to 34, wherein the method further comprises:
receiving, by the second node, a first key from the fifth node, wherein the first key is determined based on an attribute corresponding to the second node, and the first key is used to decrypt encrypted data of the fifth node.

36. The method according to claim 35, wherein the method further comprises:
sending, by the second node, a fourth request to a blockchain node, wherein the fourth request is used to request to obtain information for accessing data of the fifth node;
receiving, by the second node, information for data access from the blockchain node, wherein the information for data access comprises information indicating a requirement that needs to be met by the second node for accessing data of the fifth node and information indicating to obtain data of the fifth node;
obtaining, by the second node, the encrypted data of the fifth node based on the information for data access; and
decrypting, by the second node, the encrypted data of the fifth node based on the first key.

37. The method according to claim 36, wherein the information indicating to obtain data of the fifth node comprises a storage address of the encrypted data of the fifth node, and/or information indicating the encrypted data of the fifth node.

38. The method according to claim 37, wherein the data of the fifth node is encrypted by using a second key, the information indicating to obtain data of the fifth node further comprises the encrypted second key, and the first key is specifically used to decrypt the encrypted second key.

39. The method according to claim 37 or 38, wherein the obtaining, by the second node, the encrypted data of the fifth node based on the information for data access comprises:
sending, by the second node, a seventh request to a storage node corresponding to the storage address, wherein the seventh request is used to request to obtain data of the fifth node; and
receiving, by the second node, the encrypted data of the fifth node from the storage node.

40. The method according to any one of claims 36 to 39, wherein the decrypting, by the second node, the encrypted data of the fifth node based on the first key comprises:
decrypting, by the second node, the encrypted second key based on the first key; and
decrypting, by the second node based on the second key, the data of the fifth node encrypted by using the second key.

41. The method according to any one of claims 32 to 40, wherein the attribute information corresponding to the second node comprises the attribute corresponding to the second node and a signature of a fourth node related to the attribute corresponding to the second node.

42. A communication method, wherein the method comprises:
receiving, by a blockchain node, a fifth request from a fourth node, wherein the fifth request is used to request installation of a smart contract corresponding to an attribute endorsement service supported by the fourth node; and
installing, by the blockchain node, the smart contract based on the fifth request.

43. The method according to claim 42, wherein the installing, by the blockchain node, the smart contract based on the fifth request comprises:
sending, by the blockchain node, second information to the fourth node based on the fifth request, wherein the second information indicates whether installation of the smart contract is supported; and
receiving, by the blockchain node, third information from the fourth node, wherein the third information indicates to install the smart contract, and the third information is determined based on the second information corresponding to at least one blockchain node on a blockchain.

44. The method according to claim 43, wherein when a result indicating whether installation of the smart contract is supported is recorded by the blockchain node on the blockchain, the second information comprises an address, on the blockchain, of the result indicating whether installation of the smart contract is supported.

45. The method according to claim 43 or 44, wherein the third information comprises a result indicating whether installation of the smart contract is supported corresponding to at least one blockchain node on the blockchain, and/or an address, on the blockchain, of the result indicating whether installation of the smart contract is supported corresponding to the at least one blockchain node.

46. The method according to any one of claims 42 to 45, wherein the method further comprises:
receiving, by the blockchain node, fourth information from the fourth node, wherein the fourth information indicates usage information of the smart contract.

47. The method according to claim 46, wherein the fourth information comprises at least one of the following: an attribute endorsement service corresponding to the smart contract, an address of the smart contract, an input parameter of the smart contract, an output parameter of the smart contract, or an application template for the attribute information.

48. A communication method, wherein the method comprises:
generating, by a fourth node, a fifth request, wherein the fifth request is used to request installation of a smart contract corresponding to an attribute endorsement service supported by the fourth node; and
sending, by the fourth node, the fifth request to a blockchain node.

49. The method according to claim 48, wherein the method further comprises:
receiving, by the fourth node, second information from the blockchain node, wherein the second information indicates whether installation of the smart contract is supported; and
sending, by the fourth node, third information to the blockchain node, wherein the third information indicates to install the smart contract, and the third information is determined based on the second information corresponding to at least one blockchain node on a blockchain.

50. The method according to claim 49, wherein when a result indicating whether installation of the smart contract is supported is recorded by the blockchain node on the blockchain, the second information comprises an address, on the blockchain, of the result indicating whether installation of the smart contract is supported.

51. The method according to claim 49 or 50, wherein the third information comprises a result indicating whether installation of the smart contract is supported corresponding to at least one blockchain node on the blockchain, and/or an address, on the blockchain, of the result indicating whether installation of the smart contract is supported corresponding to the at least one blockchain node.

52. The method according to any one of claims 48 to 51, wherein the method further comprises:
sending, by the fourth node, fourth information to the blockchain node, wherein the fourth information indicates usage information of the smart contract.

53. The method according to claim 52, wherein the fourth information comprises at least one of the following: an attribute endorsement service corresponding to the smart contract, an address of the smart contract, an input parameter of the smart contract, an output parameter of the smart contract, or an application template for attribute information.

54. The method according to claim 48, wherein the method further comprises:
receiving, by the fourth node, a first request from a second node, wherein the first request is used to request to obtain an attribute; and
sending, by the fourth node, attribute information to the second node based on the first request.

55. The method according to claim 54, wherein the attribute information comprises an attribute corresponding to the second node and a signature of a fourth node related to the attribute corresponding to the second node.

56. The method according to claim 55, wherein the attribute information further comprises at least one of the following: an issuance time of the attribute information, a validity period of the attribute information, an identifier of the second node, or a signature of a blockchain node on the attribute corresponding to the second node.

57. The method according to any one of claims 54 to 56, wherein the method further comprises:
receiving, by the fourth node, first information from a blockchain node, wherein the first information indicates an address of the attribute information on the blockchain.

58. A communication method, wherein the method comprises:
determining, by an operator node, that a first terminal device and a second terminal device access a network corresponding to the operator node; and
sending, by the operator node, an attribute corresponding to the second terminal device to the first terminal device when determining that the first terminal device receives a call request of the second terminal device.

59. The method according to claim 58, wherein the method further comprises:
sending, by the operator node, a sixth request to a blockchain node, wherein the sixth request is used to request to obtain the attribute corresponding to the second terminal device; and
receiving, by the operator node, attribute information corresponding to the second terminal device from the blockchain node, wherein the attribute information corresponding to the second terminal device comprises the attribute corresponding to the second terminal device and a signature of a fourth node related to the attribute corresponding to the second terminal device.

60. The method according to claim 59, wherein the attribute information corresponding to the second terminal device further comprises an identifier of the second terminal device and/or a signature of the blockchain node on the attribute corresponding to the second terminal device.

61. A communication method, wherein the method comprises:
receiving, by a blockchain node, a fourth request from a second node, wherein the fourth request is used to request to obtain information for accessing data of a fifth node; and
sending, by the blockchain node, information for data access to the second node, wherein the information for data access comprises information indicating a requirement that needs to be met by the second node for accessing data of the fifth node and information indicating to obtain data of the fifth node.

62. The method according to claim 61, wherein the method further comprises:
receiving, by the blockchain node, the information for data access from the fifth node.

63. The method according to claim 61 or 62, wherein the information indicating to obtain data of the fifth node comprises a storage address of encrypted data of the fifth node, and/or information indicating the encrypted data of the fifth node.

64. The method according to claim 63, wherein the data of the fifth node is encrypted by using a second key, and the information indicating to obtain data of the fifth node further comprises the encrypted second key.

65. The method according to any one of claims 61 to 64, wherein the method further comprises:
receiving, by the blockchain node, information indicating an access record of the second node from the fifth node.

66. A communication method, wherein the method comprises:
receiving, by a blockchain node, an eighth request from a second node, wherein the eighth request is used to request to call a first smart contract, and the first smart contract is used to determine whether the second node can access data of a fifth node; and
determining, by the blockchain node based on the eighth request and the first smart contract, whether the second node can access data of the fifth node.

67. The method according to claim 66, wherein the eighth request comprises attribute information corresponding to the second node.

68. The method according to claim 67, wherein the attribute information corresponding to the second node comprises an attribute corresponding to the second node and a signature of a fourth node related to the attribute corresponding to the second node.

69. The method according to any one of claims 66 to 68, wherein the method further comprises:
sending, by the blockchain node, a first key to the second node when the second node can access data of the fifth node, wherein the first key is used to decrypt encrypted data of the fifth node.

70. The method according to any one of claims 66 to 69, wherein the method further comprises:
receiving, by the blockchain node, information for data access from the fifth node, wherein the information for data access comprises information indicating a requirement that needs to be met by the second node for accessing data of the fifth node and information indicating to obtain data of the fifth node.

71. The method according to claim 70, wherein the method further comprises:
receiving, by the blockchain node, a fourth request from the second node, wherein the fourth request is used to request to obtain information for accessing data of the fifth node; and
sending, by the blockchain node, the information for data access to the second node.

72. The method according to claim 70 or 71, wherein the information indicating to obtain data of the fifth node comprises a storage address of the encrypted data of the fifth node, and/or information indicating the encrypted data of the fifth node.

73. The method according to claim 72, wherein the data of the fifth node is encrypted by using a second key, and the information indicating to obtain data of the fifth node further comprises the encrypted second key.

74. The method according to any one of claims 66 to 73, wherein the method further comprises:
generating and recording, by the blockchain node, an access status of the fifth node when the second node can access data of the fifth node.

75. A communication method, wherein the method comprises:
generating, by a second node, an eighth request, wherein the eighth request is used to request to call a first smart contract, and the first smart contract is used to determine whether the second node can access data of a fifth node; and
sending, by the second node, the eighth request to a blockchain node.

76. The method according to claim 75, wherein the eighth request comprises attribute information corresponding to the second node.

77. The method according to claim 76, wherein the attribute information corresponding to the second node comprises an attribute corresponding to the second node and a signature of a fourth node related to the attribute corresponding to the second node.

78. The method according to any one of claims 75 to 77, wherein the method further comprises:
receiving, by the second node, a first key from the blockchain node, wherein the first key is used to decrypt encrypted data of the fifth node.

79. The method according to claim 78, wherein the method further comprises:
sending, by the second node, a fourth request to the blockchain node, wherein the fourth request is used to request to obtain information for accessing data of the fifth node;
receiving, by the second node, information for data access from the blockchain node, wherein the information for data access comprises information indicating a requirement that needs to be met by the second node for accessing data of the fifth node and information indicating to obtain data of the fifth node;
obtaining, by the second node, the encrypted data of the fifth node based on the information for data access; and
decrypting, by the second node, the encrypted data of the fifth node based on the first key.

80. The method according to claim 79, wherein the information indicating to obtain data of the fifth node comprises a storage address of the encrypted data of the fifth node, and/or information indicating the encrypted data of the fifth node.

81. The method according to claim 80, wherein the data of the fifth node is encrypted by using a second key, and the information indicating to obtain data of the fifth node further comprises the encrypted second key.

82. The method according to claim 81, wherein the obtaining, by the second node, the encrypted data of the fifth node based on the information for data access comprises:
sending, by the second node, a seventh request to a storage node corresponding to the storage address, wherein the seventh request is used to request to obtain data of the fifth node; and
receiving, by the second node, the encrypted data of the fifth node from the storage node.

83. The method according to claim 81 or 82, wherein the decrypting, by the second node, the encrypted data of the fifth node based on the first key comprises:
decrypting, by the second node, the encrypted second key based on the first key; and
decrypting, by the second node based on the second key, the data of the fifth node encrypted by using the second key.

84. A communication apparatus, comprising a module configured to perform the method according to any one of claims 1 to 83.

85. A communication apparatus, comprising a processor, wherein the processor is configured to run a computer program or instructions, to implement the method according to any one of claims 1 to 83.

86. A communication chip, wherein the communication chip stores instructions, and when the chip is run on a communication device, the method according to any one of claims 1 to 83 is implemented.

87. A computer-readable storage medium, wherein the computer-readable storage medium stores a computer program or instructions, and when the computer program or the instructions are executed by a communication apparatus, the method according to any one of claims 1 to 83 is implemented.

88. A computer program product, comprising computer program code, wherein when the computer program code is run on a communication apparatus, the communication apparatus implements the method according to any one of claims 1 to 83.
